(19) Europäisches Patentamt
European Patent Office
Office européen des brevets

(11) EP 2 573 145 A1

(12) # EUROPEAN PATENT APPLICATION
published in accordance with Art. 153(4) EPC

(43) Date of publication:
**27.03.2013 Bulletin 2013/13**

(21) Application number: **10851760.8**

(22) Date of filing: **20.05.2010**

(51) Int Cl.:
***C09D 4/06*** (2006.01)
***B32B 27/30*** (2006.01)
***C09D 4/00*** (2006.01)
***C09D 5/00*** (2006.01)
***C09D 135/02*** (2006.01)

(86) International application number:
**PCT/JP2010/058534**

(87) International publication number:
**WO 2011/145196 (24.11.2011 Gazette 2011/47)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(71) Applicants:
- **Riken Technos Corp.**
  **Chuo-ku**
  **Tokyo 103-8438 (JP)**
- **BASF SE**
  **67056 Ludwigshafen (DE)**

(72) Inventors:
- **TASAKA, Michihisa**
  **Kawasaki-city, Kanagawa 215-0001 (JP)**
- **KANNO, Hiroyasu**
  **Tokyo 175-0094 (JP)**

(74) Representative: **Wilson, Justin Scott**
**Withers & Rogers LLP**
**4 More London Riverside**
**London SE1 2AU (GB)**

(54) **COATING MATERIAL FOR FORMATION OF HARD COATS, AND MOLDED PRODUCTS**

(57) A hard coat paint according to the present invention contains (a) vinyl ester resin or unsaturated polyester resin by 10 to 30 mass%, (b) vinyl monomer and/or (meth)acrylate monomer by 50 to 75 mass%, (c) monomer having a cyclic structure and at least one ethylenically unsaturated group in a molecule by 3 to 20 mass%, (d) a modifying agent by 0 to 10 mass% (provided that the total of the components (a) to (d) is 100 mass%) and (e) at least one radical polymerization initiator selected from a group of organic peroxides, UV reaction initiators and electron beam reaction initiators by 0.1 to 15 parts by mass relative to the total of 100 parts by mass of the components (a) to (d).

EP 2 573 145 A1

**Description**

Technical Field

The present invention relates to a hard coat paint and a molded body. More particularly, this invention relates to a hard coat paint that realizes a high order well-balanced combination of hardness, abrasion resistance, weather resistance, chemical resistance and water resistance and shows an excellent adhesion property relative to substrates of various types but does not degrade the working environment and also to a molded body having hard coat layer formed by such hard coat paint.

Background Art

Conventionally, molded bodies having a hard coat layer formed on a substrate have been and are widely available for use as various products (see, for example, Patent Documents 1 through 3 listed below).
For example, molded bodies having a polycarbonate substrate and hard coat layer formed on the substrate are being employed as various building materials, automobile window materials and structural materials. When such molded bodies are employed for exterior uses, they are required to have excellent properties including weather resistance, chemical resistance and water resistance in addition to excellent mechanical properties (hardness, abrasion resistance).
Quench-hardened layers of hydrolysis condensates of silicon alkoxides and multifunctional acrylates are being popularly adopted for hard coat layers.
However, it has not been possible for known hard coat layers to achieve a high order well-balanced combination of hardness, abrasion resistance, weather resistance, chemical resistance and water resistance.
Additionally, known hard coat layers are poorly adhesive to polycarbonates and hence it has been necessary to arrange hard coat layer after forming a special primer layer on a polycarbonate member. Such an arrangement gives rise to a problem from the viewpoint of manufacturing cost. The problem is observable when glass, acryl-based resins, polyester-based resins, soft and hard vinyl chloride resins and styrene-based resins are used for substrates beside polycarbonates. Thus, there is a demand for measures for improving the situation.
Furthermore, known hard coat paint products are diluted by an organic solvent to regulate the viscosity thereof and, after applying such a paint onto a substrate, it needs to be heated and dried to dry off the organic solvent to give rise to a problem to the working environment.

[Prior Art Documents]

[Patent Documents]

[Patent Document 1] Japanese Patent Laid-Open Publication No. 48-81928
[Patent Document 2] Japanese Patent Laid-Open Publication No. 52-138565
[Patent Document 3] Japanese Patent Laid-Open Publication No. 53-138476

[Disclosure of the Invention]

[Problem to Be Solved by the Invention]

Therefore, the object of the present invention is to provide a hard coat paint that realizes a high order well-balanced combination of hardness, abrasion resistance, weather resistance, chemical resistance and water resistance and shows an excellent adhesion property relative to substrates of various types (such that it can directly coat a substrate without treating the substrate by means of a primer) but does not degrade the working environment and also to a molded body having a hard coat layer formed by such hard coat paint.

[Means for Solving the Problem]

According to the present invention, the above problem is solved by providing:

1. A hard coat paint characterized by containing:

(a) vinyl ester resin or unsaturated polyester resin by 10 to 30 mass%;

(b) vinyl monomer and/or (meth) acrylate monomer by 50 to 75 mass%;
(c) monomer having a cyclic structure and at least an ethylenically unsaturated group in a molecule by 3 to 20 mass%;
(d) a modifying agent by 0 to 10 mass%;
(provided that the total of the components (a) through (d) is 100 mass%); and
(e) at least a radical polymerization initiator selected from a group of organic peroxides, UV reaction initiators and electron-beam reaction initiators by 0.1 to 15 mass portions relative to the total of 100 mass portions of the components (a) through (d);
(provided that, if the component (b) contains a cyclic structure, the cyclic structure contains a heteroatom); and
(provided that the component (c) does not contain any heteroatom in the cyclic structure).

2. The hard coat paint as defined in 1 above, characterized in that it can obtain a pencil hardness of not less than F.

3. A molded body characterized in that it is formed by arranging hard coat layer (A) formed by the hard coat paint as defined in 1 or 2 above onto substrate (B) made of glass, a polycarbonate, an acryl-based resin, a polyester-based resin, soft and hard vinyl chloride resins, or a styrene-based resin.

4. The molded body as defined in 3 above, characterized in that the thickness of the hard coat layer (A) is between 1.5 to 10 μm.

[Advantages of the Invention]

Thus, the hard coat paint according to the present invention provides a hard coat paint that realizes a high order well-balanced combination of hardness, abrasion resistance, weather resistance, chemical resistance and water resistance and shows an excellent adhesion property relative to various substrates but does not degrade the working environment because it is produced by compounding the above-described specific components (a) through (e) to the specified ratio. A hard coat paint according to the present invention does not need to be diluted by an organic solvent because it has a viscosity appropriate for application and hence can improve the working environment where it is used. A molded body has hard coat layer formed by the hard coat paint according to the present invention and hence the hard coat layer and the substrate of the molded body adhere excellently to each other (such that the hard coat paint can directly coat the substrate without treating the substrate by means or a primer), while hard coat paint realizes a high order well-balanced combination of hardness, abrasion resistance, weather resistance, chemical resistance and water resistance.

[Best Mode for Carrying Out the Invention]

Now, the present invention will be described below in greater detail.

<u>Component (a) vinyl ester resin or unsaturated polyester resin</u>

The component (a) of the hard coat paint according to the present invention is vinyl ester resin or unsaturated polyester resin.
More specifically, vinyl ester resin is selected from urethane (meth)acrylate resins, epoxy (meth)acrylate resins and polyester (meth)acrylate resins, preferably from urethane (meth) acrylate resins that are particularly excellent in terms of high-hardness expressibility, quick drying, adhesiveness, non-yellowing property and low-viscosity expressibility. Note that the expression of (meth)acrylate as used herein refers to acrylate or methacrylate.
Preferably, urethane (meth)acrylate resins that can be used for the present invention are those that can be obtained by way of a reaction of polyol, polyisocyanate and (meth) acrylate having one or more hydroxyl groups in a molecule and has two or more (meth)acryloyl groups in a molecule.
Preferably, polyols that can be used for the urethane (meth)acrylate have a number-average molecular weight preferably between 200 to 3,000, more preferably between 400 to 2,000.
Examples of such polyols typically include polyether polyols, polyester polyols, polycarbonate polyols and polybutadiene polyols. A polyol selected from the above listed ones may be used. Alternatively, two or more of such polyols can be used in combinations.
For the purpose of the present invention, polyether polyols may include polyols obtained by adding alkylene oxide to bisphenol A and bisphenol F besides polyalkylene oxides such as polyethylene glycol, polypropylene glycol and poly tetramethylene glycol.
The expression of polyester polyols as used herein refers to condensate polymers of dibasic acids and polyhydric

alcohols or ring-opening polymerization products of cyclic ester compounds such as polycaprolactone. Examples of dibasic acids that can be used for the present invention include phthalic acid, phthalic anhydride, halogenated phthalic anhydride, isophthalic acid, terephthalic acid, tetrahydrophthalic acid, tetrahydrophthalic anhydride, hexahydrophthalic acid, hexahydrophthalic anhydride, hexahydroterephthalic acid, hexahydroisophthalic acid, succinic acid, malonic acid, gultaric acid, adipic acid, sebacic acid, 1,12-dodecanedicarboxylic acid, 2,6-naphthalenedicarboxylic acid, 2,7-naphthalenedicarboxylic acid, 2,3-naphthalenedicarboxylic acid, 2,3-naphthalenedicarboxylic anhydride, 4,4'-biphenyldicarboxylic acid and dialkyl esters thereof. Examples of polyhydric alcohols that can be used for the present invention include ethylene glycol, diethylene glycol, triethylene glycol, polyethylene glycol, propylene glycol, dipropylene glycol, tripropylene glycol, polypropylene glycol, 2-methyl-1,3-propane diol, 1,3-butane diol, neopentyl glycol, hydrogenated bisphenol A, 1, 4-butane diol, 1, 6-hexane diol, bisphenol A-propylene oxide or ethylene oxide adduct, 1,2,3,4-tetrahydroxybutane, glycerin, trimethylolpropane, 1,3-propane diol, 1,2-cyclohexane glycol, 1,3-cyclohexane glycol, 1,4-cyclohexane glycol, 1,4-cyclohexane dimethanol, para-xylene glycol, bicyclohexyl-4,4'-diol, 2,6-decalin glycol and 2,7-decalin glycol.

Examples of polyisocyanates that can be used for the urethane (meth)acrylate resins include 2,4-TDI, isomers thereof and mixtures of isomers thereof, MDI, HDI, IPDI, XDI, hydrogenated XDI, dicyclohexylmethane diisocyanate, tridine diisocyanate, naphthalene diisocyanate and triphenylmethane triisocyanate. Any one of these polyisocyantes can be used alone and also any two or more of them can be used in combination.

Examples of (meth)acrylates (hydroxyl group-containing (meth)acrylate) having one or more hydroxyl groups in a molecule to be used for the urethane(meth)acrylate resins include mono(meth)acrylates such as 2-hydroxyethyl (meth)acrylate, 2-hydroxypropyl(meth)acrylate, 3-hydoxybutyl (meth)acrylate, polyethylene glycol mono(meth)acrylate and polypropylene glycol mono(meth)acrylate; and polyhydric (meth)acrylates such as tris(hydroxyethyl) isocyanurate di(meth)acrylate and pentaerythritol tri(meth)acrylate.

Exemplar methods of manufacturing the urethane(meth)acrylate resins include (1) a method of firstly causing a polyisocyanate and a polyol to react with each other preferably at a ratio of NCO/OH = 1.3 to 2 to produce a terminal isocyanate compound and then causing the compound to react with a hydroxyl group-containing (meth)acrylate so as to make the isocyanate group and the hydroxyl group show substantially the same quantity and (2) a method of causing a polyisocyanate compound and a hydroxyl group-containing (meth) acrylate to react at a ratio of NCO/OH = not less than 2 to produce a terminal isocyanate compound and then adding a polyol for reaction.

Epoxy (meth) acrylate resins that can be used as vinyl ester resins for the present invention preferably contains two or more (meth)acryloyl groups in a molecule that can be obtained by way of a reaction of such a resin and an unsaturated monobasic acid in the presence of an esterification catalyst.

Examples of epoxy resins as used herein include bisphenol type and novolac type epoxy resins alone and mixtures of bisphenol type and novolac type epoxy resins whose average epoxy equivalent is preferably within the range between 150 to 450.

Typical examples of the bisphnol type epoxy resins include glycidyl ether type epoxy resins substantially having two or more epoxy groups in a molecule that can be obtained by way of a reaction of epichlorohydrin and bisphnol A or bisphenol F, methylglycidyl ether type epoxy resins that can be obtained by way of a reaction of methylepichlorohydrin and bisphenol A or bisphenol F, and epoxy resins that can be obtained from bisphenol A - alkylene oxide adduct and epichlorohydrin or methyl epichlorohydrin. Typical examples of the novolac type epoxy resins include those that can be obtained by way of a reaction of phenol novolac or cresol novolac and epichlorohydrin or methyl epichlorohydrin.

Typically examples of unsaturated monobasic acids to be used for epoxy (meth) acrylate resins include acrylic acid, methacrylic acid, cinnamic acid, crotonic acid, monomethyl maleate, monopropyl maleate, mono (2-ethylhexyl) maleate and sorbic acid. Any of these unsaturated monobasic acids can be used alone or as a mixture of two or more of any of them. The above-described reaction of an epoxy resin and an unsaturated monobasic acid is conducted at temperature between 80 to 120°C in the presence of an esterification catalyst.

Examples of the esterification catalysts that can be used for the present invention may be known catalysts and include tertiary amines such as triethyl amine, N,N-dimethylbenzylamine, N,N-dimethylaniline and diazabicyclooctane, triphenylphosphine and diethylamine hydrochloride.

Polyester (meth)acrylate resins to be used as vinyl ester resins are saturated or unsaturated polyesters having two or more (meth)acryloyl groups in a molecule, whose terminals are caused to react with a (meth) acryl compound. The number-average molecular mass of such resins is preferably between 500 to 5,000.

Saturated polyesters that can be used for the present invention are those obtained by way of a condensation reaction of a saturated dibasic acid and a polyhydric alcohol. Unsaturated polyesters that can be used for the present invention are those obtained by way of a condensation reaction of a dibasic acid selected from a group of dibasic acids including $\alpha$, $\beta$-unsaturated dibasic acids and a polyhydric alcohol. Note that, for the present invention, resins obtained by causing a terminal of an unsaturated polyester to react with a (meth) acryl compound are included in vinyl ester resins and should be discriminated from the unsaturated polyester resins that are described below.

Saturated dibasic acids as used herein include the compounds listed in the paragraph having above-described polyester polyols. Examples of $\alpha$, $\beta$-unsaturated dibasic acids include maleic acid, maleic anhydride, fumaric acid, itaconic

acid and itaconic anhydride. Polyhydric alcohols that can be used for the invention include the applicable compounds listed in the paragraph having the polyester polyols.

(Meth) acrylic compounds for polyester (meth) acrylate resins that can be used as vinyl ester resins for the present invention include unsaturated glycidyl compounds, unsaturated monobasic acids such as acrylic acid and methacrylic acid and glycidyl esters thereof. The use of glycidyl (meth)acrylates is preferable.

Unsaturated polyester resins are obtained by way of condensation polymerization of an acid component and an alcohol component, using a known method. Any unsaturated polyester resins can be used without limitations so long as such resins are known as thermosetting resins. Examples of acid components include unsaturated dibasic acids such as maleic anhydride, maleic acid, fumaric acid and itaconic acid. If necessary, saturated dibasic acids such as phthalic acid, phthalic anhydride, isophthalic acid, terephthalic acid, succinic acid, adipic acid and sebacic acid; and acids other than dibasic acids such as benzoic acid and trimellitic acid can be used. Examples of alcohol components include the polyhydric alcohols listed in the paragraph having the polyester polyols.

<u>Component (b) vinyl monomer and/or (meth)acrylate monomer</u>

The component (b) of hard coat paint according to the present invention is a vinyl monomer and/or a (meth)acrylate monomer.

Note that, however, if the component (b) contains a cyclic structure, the cyclic structure contains a heteroatom. Specific examples of vinyl monomers and (meth)acrylate monomers that can be used for the present invention include trimethylolpropane tri(meth)acrylate, pentaerythritol tri(meth)acrylate, ethylene glycol di(meth)acrylate, tetraethylene glycol di (meth)acrylate, polyethylene glycol di(meth)acrylate, 1,4-butanediol di(meth)acrylate, 1,6-hexanediol di(meth)acrylate, neopentyl glycol di(meth)acrylate, trimethylolpropane trioxyethyl (meth)acrylate, tris(2-hdyroxyethyl)isocyanurate tri (meth)acrylate, tris(2-hydroxyethyl)isocyanurate di(meth)acrylate and tricyclodecane dimethanol di(meth)acrylate.

Other examples of (meth)acrylates include hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, tetrahydrofurfuryl (meth)acrylate, butoxyethyl (meth)acrylate, ethoxydiethylene glycol (meth)acrylate, benzyl (meth)acrylate, phenoxyethyl (meth)acrylate, polyethylene glycol mono(meth)acrylate, polypropylene glycol mono(meth)acrylate, methoxyethylene glycol (meth)acrylate, ethoxyethoxy ethyl (meth)acrylate, methoxy polyethylene glycol (meth)acrylate, methoxy polypropylene glycol (meth)acrylate, isobornyl (meth)acrylate, bornyl (meth)acrylate, diacetone (meth)acrylamide, isobutoxy methyl (meth)acrylamide, N-vinylpyrrolidone, N-vinylcaprolactam, N,N-dimethyl (meth)acrylamide, t-octyl (meth)acrylamide, dimethylaminoethyl (meth)acrylate, diethylaminoethyl (meth)acrylate, 7-amino-3,7-dimethyloctyl (meth)acrylate, N,N-diethyl (meth)acrylamide, N,N'-dimethylaminopropyl (meth)acrylamide, (meth)acryloylmorpholine, hydroxybutylvinylether, laurylvinylether, cetylvinylether and 2-ethylhexylvinylether.

The component (b) vinyl monomer and/or (meth)acrylate monomer of hard coat paint according to the present invention is a kind of monomer preferably selected from (b-1) compounds having a cyclic structure containing a heteroatom and an ethylenically unsaturated group and (b-2) diacrylate monomers containing no cyclic structure from the viewpoint of high-hardness expressibility, quick drying, adhesiveness, non-yellowing property and low-viscosity expressibility. More preferably, a compound selected from (b-1) and a diacrylate monomer selected from (b-2) are used in combination.

<u>(b-1) Compounds having a cyclic structure containing a heteroatom and an ethylenically unsaturated group</u>

The component (b-1) to be used for the present invention is a compound having a cyclic structure containing a heteroatom and an ethylenically unsaturated group.

Examples of compounds of component (b) include acryloyl morpholine, vinyl imidazole and vinyl pyridine.

Furthermore, compounds expressed by chemical formula (1) and those expressed by chemical formula (2) can be used.

[chemical formula 1]

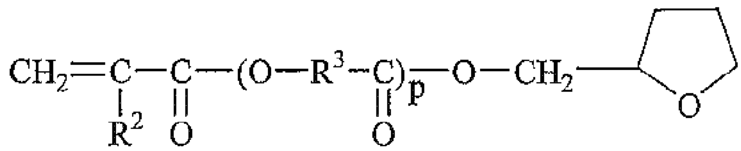

(1)

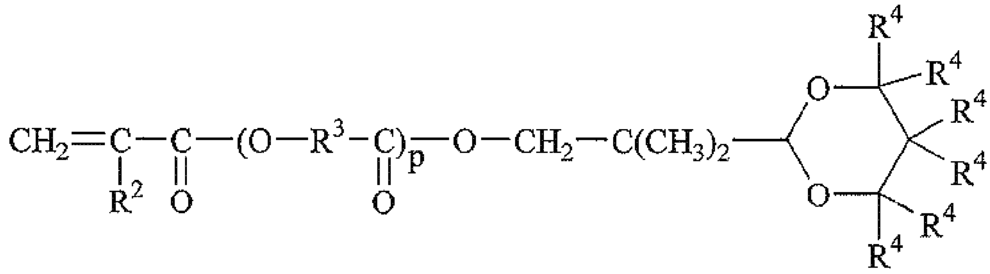

(2)

(where $R^2$ represents a hydrogen atom or a methyl group, $R^3$ represents an alkylene group having 2 to 8 carbon atoms, preferably 2 to 5 carbon atoms, while $R^4$ represents a hydrogen atom or a methyl group and p preferably represents a number between 1 to 4.

Additionally, component (b-1) may be selected from monomers having an N-vinyl group that are excellent in terms of high-hardness expressibility, quick drying, adhesiveness, non-yellowing property and low-viscosity expressibility. Examples of such monomers include N-vinylpyrrolidone, N-vinylcaprolactam, N-vinylformamide, N-vinylimidazole and N-vinylcarbazole, of which N-vinylcaprolactam is preferably because it is excellent in terms of adhesiveness and low-viscosity expressibility.

The component (b-2) to be used for the present invention is diacrylate monomers containing no cyclic structure. Examples of diacrylate monomers containing no cyclic structure that can be used for the present invention include ethylene glycol diacrylate, dipropylene glycol diacrylate (DPGDA), 1,6-hexane diol diacrylate (HDDA), 1,4-butane diol diacrylate, tetraethylene glycol diacrylate, tripropylene glycol diacrylate (TPGDA) and PO-modified neopentyl glycol diacrylate, of which dipropylene glycol diacrylate and tripropylene glycol diacrylate are preferable from the viewpoint of high-hardness expressibility, quick drying and non-yellowing property.

When the (b-1) and (b-2) are used in combination and if (b-1) + (b-2) = 100 parts by mass, the compounding ratio thereof is such that 80 to 20 parts by mass, preferably 75 to 25 parts by mass, for (b-1) and 20 to 80 parts by mass, preferably 25 to 75 parts by mass, for (b-2).

<u>Component (c) monomer having a cyclic structure and at least an ethylenically unsaturated group in a molecule</u>

The component (c) of hard coat paint according to the present invention is a monomer having a cyclic structure and at least an ethylenically unsaturated group in a molecule, provided that the component (c) does not contain any heteroatom (N, O, S etc.) in the cyclic structure.

The component (c) is excellent in terms of compatibility with the other components of hard coat paint according to the present invention and additionally, advantageously has a viscosity-lowering feature, a hardness-improving feature and an abrasion resistance-improving feature without adversely affecting the transparency of the paint.

From the viewpoint of the advantages of the present invention, the component (c) is preferably (c-1) cycloalkene and/or (c-2) a alicyclic vinyl compound.

Examples of (c-1) cycloalkenes include cyclobutene, cyclopentene, cycloheptene, cyclohexene, cycloheptene, 1,3-cyclohexadiene, 1,4-cyclohexadiene, 1,5-cyclooctadiene and cyclooctene. The number of carbon atoms of the cycloalkene to be used for the present invention is preferably between 4 to 20. Any one of them may be employed alone or two or more of them may be used in combination. Dicyclopentadiene-based monomers can also be used for (c-1). Dicyclopentadiene-based monomers are preferable from the viewpoint of low-viscosity property, compatibility and high hardness.

Dicyclopentadiene-based monomers include dicyclopentadiene and substitution products thereof. Such substitution products include alkyl substitution products, alkylidene substitution products and aromatic substitution products. Such substitution products may additionally have a polar group selected from halogen, a hydroxyl group, ester groups, alkoxy groups, cyano groups, amide group, imide groups and silyl groups. The number of carbon atoms of the dicyclopentadiene-based monomer to be used for the present invention is preferably between 4 to 20. Any one of them may be employed alone or two or more of them may be used in combination.

Specific examples of dicyclopentadiene-based monomers include dicyclopentadiene, 2-methyldicyclopentadiene, 2-ethyldicyclopentadiene, 5-methyldicyclopentadiene, 5,5-dimethyldicyclopentadiene and 2,3-dihydrodicyclopentadiene. Dicyclopentadiene, alkyl substitution products thereof, alkylidene substitution products thereof and aromatic substitution

products thereof are preferable because they are particularly advantageous for the purpose of the present invention. Such substitution products may have a polar group selected from halogen, a hydroxyl group, ester groups, alkoxy groups, cyano groups, amide group, imide groups and silyl groups. Particularly, the use of dicyclopentadiene is preferable.

(c-2) alicyclic vinyl compounds include cycloalkene vinyl compounds (c-2-1) and cycloalkane vinyl compounds (c-2-2).

For the purpose of the present invention, any cycloalkene vinyl compounds (c-2-1) may be used without limitations so long as they have an aliphatic ring with 5 to 8 carbon atoms and double bonds and a polymerizable vinyl group. The aliphatic ring may have an alkyl group with 1 to 4 carbon atoms or a halogen atom group as substitution group. Examples of cycloalkene vinyl compounds include cyclopentene vinyl compounds such as 2-vinyl cyclopentene, 2-methyl-4-vinylpentene, 3-vinyl cyclopentene, 3-t-butyl-4-vinyl pentene; cyclohexene vinyl compounds such as 4-vinyl cyclohexene, 4-isopropenyl vinyl cyclohexene, 1-methyl-4-vinyl cyclohexene, 1-methyl-4-isorpopenyl vinyl cyclohexene, 2-methyl-4-vinyl cyclohexene, 2-methyl-4-isopropenyl vinyl cyclohexene; cycloheptene vinyl compounds such as 2-vinyl cycloheptene, 3-vinyl cycloheptene, 4-vinyl cycloheptene, 3-methyl-6-vinyl cycloheptene, 4-ethyl-6-vinyl cycloheptene and 3-t-butyl-5-vinyl cycloheptene; cyclooctene vinyl compounds such as 2-vinyl cyclooctene, 3-vinyl cyclooctene, 4-vinyl cyclooctene, 2-methyl-5-vinyl cyclooctene, 4-ethyl-6-vinyl cyclooctene and 3-t-butyl-7-vinyl cyclooctene.
The cycloalkene vinyl compounds (c-2-1) may have a (meth)acryloyl group for a vinyl bond.

Any cycloalkane vinyl compounds (c-2-2) may be used for the present invention without limitations so long as they have a saturated aliphatic ring with 5 to 8 carbon atoms and a polymerizable vinyl group. The alicphatic ring may have an alkyl group with 1 to 4 carbon atoms or a halogen atom group as substitution group. Examples of cycloalkane vinyl compounds include cyclopentane vinyl compounds such as 2-vinyl cyclopentane, 2-methyl-4-vinyl pentane, 3-vinyl cyclopentane and 3-t-butyl-4-vinyl pentane; cyclohexane vinyl compounds such as 4-vinyl cyclohexane, 4-isopropenyl vinyl cyclohexane, 1-methyl-4-vinyl cyclohexane, 1-methyl-4-isopropenyl vinyl cyclohexane, 2-methyl-4-vinyl cyclohexane, 2-methyl-4-isopropenyl vinyl cyclohexane; cyclheptane vinyl compounds such as 2-vinyl cycloheptane, 3-vinyl cycloheptane, 4-vinyl cycloheptane, 3-methyl-6-vinyl cycloheptane, 4-ethyl-6-vinyl cycloheptane and 3-t-butyl-5-vinyl cycloheptane; cylcooctane vinyl compounds such as 2-vinyl cyclooctane, 3-vinyl cyclooctane, 4-vinyl cyclooctane, 2-methyl-5-vinyl cyclooctane, 4-ethyl-6-vinyl cyclooctane and 3-t-butyl-7-vinyl cyclooctane; and cycloalkane vinyl ether compounds having a saturated aliphatic ring with 5 to 8 carbon atoms such as 1,4-cyclohexane dimethanol divinyl ether, cyclopentane vinyl ether, cyclohexane vinyl ether, cycloheptane vinyl ether, cyclooctane vinyl ether, 4-methyl cyclohexyl vinyl ether and cyclohexyl methyl vinyl ether, of which cyclohexane viny compounds and cyclohexane vinyl ether compounds are preferable from the viewpoint of low-viscosity property, compatibility and high hardness. Particularly, 1,4-cyclohexane dimethanol divinyl ether (CHDM) is preferable from the viewpoint low-viscosity property, compatibility and high hardness.
The cycloalkane vinyl compounds (c-2-1) may have a (meth)acryloyl group for a vinyl bond.

<u>Component (d) modifying agent</u>

The component (d) of hard coat paint according to the present invention is a voluntary component, which is a modifying agent.
The (d) modifying agent include at least one selected from a group of polyols (d-1) having a hydroxyl value of 40 to 330 mgKOH/g, polyols (d-2) having a hydroxyl value of 40 to 330 mgKOH/g and an acid value of 2 to 20 mgKOH/g, modified rubbers (d-3) and compounds (d-4) having an epoxy equivalent of 150 to 700 g/mol.

(i) polyols (d-1) having a hydroxyl value of 40 to 330 mgKOH/g will be described below.

The hydroxyl value of the component (d) contributes to improvement of adhesiveness of hard coat paint according to the present invention to substrate (B) made of glass, a polycarbonate, an acryl-based resin, a polyester-based resin, soft and hard vinyl chloride resins, or a styrene-based resin.

Examples of (i) polyols (d-1) having a hydroxyl value of 40 to 330 mgKOH/g include aromatic-based, aliphatic-based, polybutadiene-based, castor oil-based and polyisoprene-based polyols. Polyols of any of the above types provide an excellent adhesiveness to the substrate (B) (made of glass, a polycarbonate, an acryl-based resin, a polyester-based resin, soft and hard vinyl chloride resins, or a styrene-based resin) so long as the hydroxyl values thereof fall within the above-identified range.

(i) Thus, the hydroxyl value is preferably 40 to 330 mgKOH/g, more preferably 150 to 300 mgKOH/g, from the viewpoint of adhesiveness.

(i) From the viewpoint of adhesiveness relative to the substrate (B), polyols (d-1) with a hydroxyl value of 40 to 330 mgKOH/g include more preferably:

(i) castor oil-based polyols (d-1-1) having a hydroxyl value of 40 to 330 mgKOH/g,
(i) polybutadiene-based polyols (d-1-2) having a hydroxyl value of 40 to 330 mgKOH/g,
(i) polyisoprene-based polyols and hydrogenated products thereof (d-1-3) having a hydroxyl value of 40 to 330 mgKOH/g or
(i) epoxy polyol resins (d-1-4) having a hydroxyl value of 40 to 330 mgKOH/g.

If necessary, two or more of polyols of components (d) can be used as mixture for the present invention.
(i) castor oil-based polyols (d-1-1) having a hydroxyl value of 40 to 330 mgKOH/g will be described below.
The "castor oil" is a kind of oil that contains triester compounds of ricinoleic acid and glycerin. Ordinarily, it is natural oil or processed natural oil but synthesized castor oil may be used for the present invention provided that it contains such compounds. The ricinoleic acid employed to form the triester compounds contained in castor oil is preferably not less than 90 mol% of all the fatty acids employed to produce the triester compounds. The castor oil to be used for the present invention may be a processed product such as a hydrogenated product (obtained by hydrogenation relative to the carbon-carbon unsaturated bonds in the ricinoleic acid skeleton). Normally, castor oil contains the triester compounds (hydrogenated triester compounds if appropriate) by not less than 90 mol% (and up to 100 mol%) of the entire oil.
The "caster oil-based polyols" are ester compounds of ricinoleic acid and/or hydrogenated ricinoleic acid and polyhydric alcohol. For the purpose of the present invention, both polyols obtained by using castor oil as starting material and polyols obtained by using a starting material other than castor oil may be used so long as they have such a composition. Polyhydric alcohols are not subjected to any limitations.
Castor oil-based polyols include polyols derived from caster oil and polyols obtained by modifying castor oil.
Polyols derived from castor oil are fatty acid ester-based polyols originating from castor oil and include polyols obtained by substituting part of the ricinoleic acid of the glycerin ester by oleic acid, those obtained by esterification of ricinoleic acid that is obtained by saponifying castor oil with single molecule polyol such as trimethylol propane or the like and mixtures of any of such polyol(s) and castor oil.
Polyols obtained by modifying castor oil include modified vegetable oil-based polyols, modified polyols having an aromatic skeleton (e.g., bisphenol A, etc.). Modified vegetable oil-based polyols can be obtained by substituting part of ricinoleic acid of a glycerin ester with a higher fatty acid obtained from another plant such as linoleic acid, linolenic acid, oleic acid or the like obtained from soybean oil, rapeseed oil, olive oil or the like.
Out of castor oil-based polyols as described above, caster oil-based polyols (d-1-1) described in component (i) having a hydroxyl value of 40 to 330 mgKOH/g are preferable from the viewpoint of the advantages of the present invention.
Furthermore, from the viewpoint of the advantages of the present invention, (i) aromatic caster oil-based polyols (d-1-1-1) having a hydroxyl value of 40 to 330 mgKOH/g are preferable, and ones having a hydroxyl value of 150 to 240 mgKOH/g are more preferable.
The component (d-1-1 -1) is any of polyols derived from caster oil having an aromatic skeleton (e.g., bisphenol A, etc.). The component (d-1-1-1) is commercially available. Examples of commercially available component (d-1-1-1) include "URIC AC Series" (Itoh Oil Chemicals Co., Ltd.). Of such polyols, adducts obtained by adding polyalkylene glycol and bisphenol A to ricinoleic acid are preferable in terms of adhesiveness to the substrate (B). They can be expressed by chemical formula (3) show below.
[chemical formula 2]

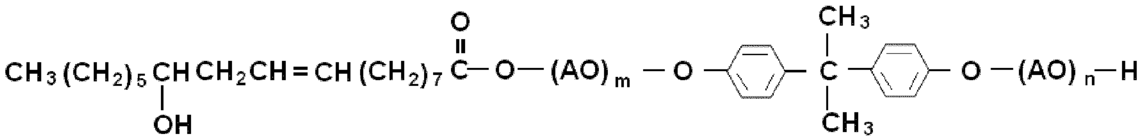

(3)

where m represents an average number between 2 to 5 and n represents an average number between 2 to 5.
Examples of modified polyols derived from caster oil expressed by the above formula (3) include those commercially available from Itoh Oil Chemicals Co., Ltd. under the trade names of URIC AC-005 (hydroxyl value: 194 to 214 mgKOH/mg, viscosity: 700 to 1,500 mPa·s/25°C), AC-006 (hydroxyl value: 168 to 187 mgKOH/mg, viscosity: 3,000 to 5,000 mPa·s/25°C), AC-008 (hydroxyl value: 180 mgKOH/mg, viscosity: 1,600 mPa·s/25°C) and AC-009 (hydroxyl value: 225 mgKOH/mg, viscosity: 1,500 mPa·s/25°C).

(i) polybutadiene-based polyols (d-1-2) having a hydroxyl value of 40 to 330 mgKOH/g will be described below.

Examples of polybutadiene-based polyols that can be used for the present invention include homopolymers such as 1,2-polybutadiene polyols and 1,4- polybutadiene polyols; copolymers such as poly(pentadiene-butadiene) polyols, poly(butadiene-styrene) polyols; and poly(butadiene-acrylonitrile) polyols and hydrogenated polybutadiene-based polyols obtained by adding hydrogen atoms to any of them.

Polybutadiene-based polyols are commercially available and include "PolybdR-15HT (hydroxyl value: 102.7 mgKOH/mg, Mw: 1,200)" and "Poly bd R-45HT (hydroxyl value: 46.6 mgKOH/mg, Mw: 2,800)" manufactured by Idemitsu Co., Ltd.

From the viewpoint of the advantages of the present invention, the hydroxyl value of (d-1-2) polybutadiene-based polyols is preferably 40 to 330 mgKOH/g, more preferably 40 to 110 mgKOH/g.

The weight-average molecular weight (GPC method) of (d-1-2) polybutadiene-based polyols is preferably between 50 to 3,000, more preferably between 800 to 1,500.

(i) polyisoprene-based polyols and hydrogenated products thereof (d-1-3) having a hydroxyl value of 40 to 330 mgKOH/g will be described below.

Examples of component (d-1-3) include "Poly ip (trade name)" (liquid polyisoprene having hydroxy groups at its terminals) available from Idemitsu Co., Ltd. Poly ip (trade name) (hydroxyl value: 46.6 mgKOH/mg, Mn: 2,500) is a polyisoprene type liquid polymer having highly reactive hydroxyl groups at molecular terminals.

Hydrogenated products of such polyols include "Epol (trade name)" (liquid polyolefin having hydroxy groups at its terminals) available from Idemitsu Co., Ltd. "Epol (trade name)" (hydroxyl value: 50.5 mgKOH/mg, Mn: 2,500) is a liquid polyolefin obtained by hydrogenating "Poly ip (trade name)." It scarcely has double bonds remaining in the molecule.

(i) epoxy polyol resins (d-1-4) having a hydroxyl value of 40 to 330 mgKOH/g will be described below.

(i) epoxy polyol resins (d-1-4) having a hydroxyl value of 40 to 330 mgKOH/g that can be used for the present invention are obtained by causing active hydrogen compounds to react with epoxy resins.

Examples of epoxy resins that can be used for the present invention include polyglycidyl ether compounds of mononuclear polyhydric phenol compounds such as hydroquinone, resorcin, pyrocatechol and phloroglucinol; polyglycidyl ether compounds of polynuclear polyhydric phenol compounds such as dihydroxy naphthalene, biphenol, methylene bisphenol (bisphenol F), methylene bis(o-cresol), ethylidene bisphenol, isopropylidene bisphenol (bisphenol A), isopropylidene bis(o-cresol), tetrabromo bisphenol A, 1,3-bis(4-hdyroxycumylbenzene), 1,4-bis(4-hydroxycumylbenzene), 1,1,3-tris(4-hydroxyphenyl)butane, 1,1,2,2,-tetra(4-hydroxyphenyl)ethane, thiobisphenol, sulfobisphenol, oxybisphenol, phenol novolac, ortho-cresol novolac, ethylphenol novolac, butylphenol novolac, octylphenol novolac, resorcin novolac, bisphenol A novolac, bisphenol F novolac and terpene diphenol; polyglycidyl ether compounds of ethylene oxides and/or propylene oxides adducts of mononuclear polyhydric phenol compounds and polynuclear polyhydric phenol compounds as described above; polyglycidyl ether compounds of hydrogenated products of mononuclear polyhydric phenol compounds as described above; polyglycidyl ethers of polyhydric alcohols such as ethylene glycol, propylene glycol, butylene glycol, hexane diol, polyglycol, thiodiglycol, glycerin, trimethylol propane, pentaerythritol, sorbitol and bisphenol A-ethylene oxide adduct; monopolymers and copolymers of glycidyl esters and glycidyl methacrylates of fatty, aromatic and alicyclic polybasic acids and glycidyl methacrylate such as maleic acid, fumaric acid, itaconic acid, succinic acid, gultaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid and endomethylene tetrahydrophthalic acid; epoxy compounds having glycidyl amino groups such as N,N-diglycidyl aniline and bis (4-(N-methyl-N-glycidylamino)phenyl) methane; epoxy compounds of cyclic olefin compounds such as vinylcyclohexene diepoxide, dicyclopentadiene epoxide, 3,4-epoxycyclohexylmethyl-3,4-epoxycyclohexane carboxylate, 3,4-epoxy-6-methylcyclohexylmethyl-6-methylcyclohexane carboxylate and bis(3,4-epoxy-6-methylcyclohexylmethyl) adipate; epoxydation conjugated diene polymers such as epoxydation polybutadiene and epoxydation styrene-butadiene copolymers; and heterocyclic compounds such as triglycidyl isocyanurate. Epoxy resins as listed above may be internally cross-linked by terminal isocyanate prepolymers.

Of the above-listed epoxy resins, the use of bisphenol type epoxy resins such as polyglycidyl ether compounds including bisphenol, methylene bisphenol (bisphenol F), methylene bis(o-cresol), ethylidene bisphenol (bisphenol AD), isopropylidene bisphenol (bisphenol A), isopropylidene bis(o-cresol), tetrabromo bisphenol A, 1,3-bis(4-hydroxycumylbenzene) and 1,4-bis(4-hydroxycumylbenzene) is preferable to obtain paint film that is excellent in terms of adhesiveness and decorativeness.

(i) epoxy polyol resins (d-1-4) having a hydroxyl value of 40 to 330 mgKOH/g can be obtained by way of a reaction with active hydrogen compounds of any epoxy group of above-listed epoxy resins, a carboxylic acid compound, a polyol and an amino compound.

Examples of the carboxylic acid compounds include fatty and aromatic and alicyclic ring monocarboxylic acids such as acetic acid, propionic acid, 2,2-dimethylol propionic acid, 12-hydroxy stearic acid, lactic acid, butyric acid, octylic acid, ricinoleic acid, lauric acid, benzoic acid, toluic acid, cinnamic acid, phenylacetic acid as well as cyclohexane carboxylic acid; maleic acid, fumaric acid, itaconic acid, succinic acid, gultaric acid, adipic acid, dimer acid, phthalic acid, isophthalic acid, terephthalic acid, hexahydrolic acid and hydroxy polycarboxylic acid.

Examples of the polyols as described above include low-molecular polyols such as ethylene glycol, diethylene glycol, 1,2-propylene glycol, 1,3-propylene glycol, 2-methyl-1,3-propylene glycol, 2,2-dimethyl-1,3-prolylene glycol, 1,2-butane diol, 1,3-butane diol, 1,4-butane diol, 1,5-pentane diol, 2,2,4-trimethyl-1,5-pentane diol, 1,6-hexane diol, 2-ethyl-1,6-hexane diol, 1,2-octane diol, 1,8-octane diol, 2-methyl-1,8-octane diol, 1,9-nonane diol, 1,10-decane diol, 1,12-octadecane diol, glycerin, trimethylol propane and pentaerythritol.

Examples of amino compounds as described above include dialkylamine compounds such as dibutyl amine and dioctyl amine; alkanolamine compounds such as methylethanol amine, butylethanol amine, diethanol amine, diisopropanol amine and dimethyl aminopropyl ethanol amine; and heterocyclicamine compounds such as morpholine, piperidine and 4-methyl piperazine.

Among the active hydrogen compounds, alkanolamine compounds such as diethanol amine are preferable.

Additionally, epoxy resins can be chain-elongated by means of a compound having two or more active hydrogen groups such as monoethanol amine and monoisopropanol amine.

When causing the epoxy resin to react with an active hydrogen compound, known ordinary methods of adding an active hydrogen compound to the epoxy resin can be adopted. For example, a method of causing them to react with each other by heating to 60 to 200°C for 3 to 10 hours in the presence of a known catalyst such as a tertiary amine compound or a phosphonium salt can be employed.

(i) epoxy polyol resins (d-1-4) having a hydroxyl value of 40 to 330 mgKOH/g preferably have a hydroxyl value between 100 to 140 mgKOH/g from the viewpoint of the advantages of the present invention.

Examples of (i) epoxy polyol resins (d-1-4) having a hydroxyl value of 40 to 330 mgKOH/g include EPICLON U-125-60BT (hydroxyl value: 100 to 140 mgKOH/g) available from DIC Co., Ltd.

Polyols (d-2) having (i) a hydroxyl value of 40 to 330 mgKOH/g and (ii) an acid value of 2 to 20 mgKOH/g will be described below.

Aromatic-based, aliphatic-based and castor oil-based polyols (d-2) having (i) a hydroxyl value of 40 to 330 mgKOH/g and (ii) an acid value of 2 to 20 mgKOH/g show an improved adhesiveness relative to substrate (B) if they satisfy both the hydroxyl value requirement of (i) and the acid value requirement of (ii).

(i) the hydroxyl value is more preferably 230 to 300 mgKOH/g.
(ii) the acid value is more preferably 4 to 15 mgKOH/g.

If both the requirement of (i) and that of (ii) are satisfied, examples of polyols (d-2) having (i) a hydroxyl value of 40 to 330 mgKOH/g and (ii) an acid value of 2 to 20 mgKOH/g include castor oil-based polyols (d-2-1) having (i) a hydroxyl value of 40 to 330 mgKOH/g and (ii) an acid value of 2 to 20 mgKOH/g.

Castor oil-based polyols (d-2-1) having (i) a hydroxyl value of 40 to 330 mgKOH/g and (ii) an acid value of 2 to 20 mgKOH/g are polyols derived from caster oil. For example, a polyol composition containing a castor oil-based polyol derived from ricinoleic acid, an acid phosphate ester compound having a total number of carbon atoms of not less than 12 and, if necessary, a terpene phenol as disclosed in Japanese Patent Laid-Open Publication No. 2005-89712 can be used. Such compositions are available from Itoh Oil Chemicals Co., Ltd. under the trade names of URIC H-1262, H2151U.

The above-cited URIC H-1262 that is available from Itoh Oil Chemicals Co., Ltd. is a polyol (viscosity: 3,500 to 8,500 mPa·s/25°C, hydroxyl value: 240 to 290 (unit mgKOH/g), acid value: 4 to 15 (unit mgKOH/g)) containing a castor oil-based polyol and an acid phosphate ester compound having a total number of carbon atoms of not less than 12. It shows an excellent adhesiveness relative to substrate (B).

The above-cited URIC H-2151U that is also available from Itoh Oil Chemicals Co., Ltd. is a polyol (viscosity: 3,500 to 8,500 mPa·s/25°C, hydroxyl value: 240 to 290 (unit mgKOH/g), acid value: 4 to 15 (unit mgKOH/g)) containing a castor oil-based polyol, an acid phosphate ester compound having a total number of carbon atoms of not less than 12 and a terpene phenol. It shows an excellent adhesiveness relative to substrate (B).

Now, modified rubbers (d-3) will be described below.

Examples of modified rubbers (d-3) that can be used for the present invention include (d-3-1) liquid carboxylated polyisoprene and (d-3-2) carboxylated polybutadiene.

<u>(d-3-1) carboxylated polyisoprene</u>

Carboxylated polyisoprene (d-3-1) to be used for the present invention has a functional feature of improving the wettability of the surface of substrate (B) and the adhesiveness.

Examples of component (d-3-1) include maleated polyisoprene available from Kuraray under the trade name of LIR-420.

(d-3-2) carboxylated polybutadiene

Carboxylated polybutadiene (d-3-2) to be used for the present invention has a functional feature of improving the wettability of the surface of substrate (B) and the adhesiveness.
Component (d-3-2) is a polymer that is transparent liquid at room temperature and has a micro structure consisting of vinyl 1,2-bond type, trans 1,4-bond type and cis 1,4-bond type in the main chain of polybutadiene. The vinyl 1,2-bond is preferably not more than 30 wt%. The achieved storage stability of the component is degraded and hence not preferable when the vinyl 1, 2 -bond exceeds 30 wt%. The cis 1,4-bonds are preferably not less than 40 wt%. The achieved adhesiveness falls and is not preferable when the cis 1,4-bonds are less than 40 wt%.
Component (d-3-2) carboxylated polybutadiene can be obtained by causing liquid polybutadiene to react with a carboxyl group-introduced compound, and the ratio of 1,3-butadiene from which the liquid polybutadiene is formed and the carboxyl group-introduced compound is preferably such that 1,3-butadiene is 80 to 90 wt% and the carboxyl group-introduced compound is 2 to 20 wt%.
Liquid polybutadiene to be used for the reaction has a number-average molecular weight of preferably 500 to 10, 000, more preferably 1,000 to 7,000 and desirably shows a broad molecular weight distribution. Preferably, such liquid polybutadiene has an iodine value of iodine 30 to 500 g/substance 100 g as observed by a method conforming to DIN53241. In addition, such liquid polybutadiene preferably has a molecular structure where cis-double bonds take 70 to 90%, trans-double bonds take 10 to 30% and vinyl-double bonds take 0 to 3%.
Examples of carboxyl group-introduced compounds include ethylene-based unsaturated dicarboxyl compounds such as ethylene-based unsaturated dicarboxylic acid and anhydrides and monoesters thereof. Specific examples of compounds include maleic acid, fumaric acid, itaconic acid, 3,6-tetrahydrophthalic acid, itaconic anhydride, 1,2-dimethyl maleic anhydride, maleic acid monomethyl ester and maleic acid monoethyl ester, of which maleic anhydride is preferable from the viewpoint of safety, economy and reactivity. (Maleated polybutadiene is preferable).
Polybutadiene/maleic anhydride-adducts formed from polybutadiene and maleic anhydride can be manufactured by means of any known method.
The acid value of maleated liquid polybutadiene is preferably between 50 to 120(mgKOH/g), more preferably between 70 to 90 (mgKOH/g) as observed by a method conforming to DIN ISO 3682. The adhesiveness of the compound falls when the acid value is less than 50 (mgKOH/g), whereas the viscosity thereof rises to damage the working property thereof when the acid value exceeds 120 (mgKOH/g).
In view of the trade off between the percentage of maleation and the viscosity of maleated liquid polybutadiene, the percentage is preferably between 6 to 20%, more preferably between 6 to 15%, most preferably between 7 to 10%.
The viscosity (20°C) of maleated liquid polybutadiene is preferably between 3 to 16 Pa·s, more preferably between 5 to 13 Pa·s, most preferably between 6 to 9 Pa·s, as observed by a method conforming to DIN53214.
Maleated liquid polybutadiene of which the vinyl-double bonds are not more than 30% and the cis-double bonds are within the above-cited range shows a higher flexibility and a high percentage of maleation (acid value) as described above if compared with liquid polybutadiene whose cis-double bonds fall below the above-described lower limit. Thus, hard coat paints obtained from such maleated liquid polybutadiene show a high adhesiveness.
The viscosity of liquid polybutadiene whose cis-double bonds fall below the above-described lower limit suddenly rises as the percentage of maleation rises, whereas the viscosity of liquid polybutadiene whose cis-double bonds fall within the above range does not show such a sudden rise. Because the viscosity of such liquid polybutadiene falls within the above range and hence low, it can provide a high reactivity and an improved working property. Additionally, hard coat paints obtained form such liquid polybutadiene are excellent in terms of decorativeness.
Examples of commercially available maleated liquid polybutadiene include POLYVEST OPENING/CLOSING 800S and 1200S (trade names) available from Evonik Degussa Co.
Now, compounds (d-4) having an epoxy equivalent of 150 to 700 g/mol will be described below.
Compounds (d-4) having an epoxy equivalent of 150 to 700 g/mol that can be used for the present invention include polyepoxy compounds (d-4-1) having an epoxy equivalent of 150 to 250 g/mol.
Examples of polyepoxy compounds (d-4-1) having an epoxy equivalent of 150 to 250 g/mol include polyglycidyl ether compounds of mononuclear polyhydric phenol compounds such as hydroquinone, resorcin, pyrocatechol and phloroglucinol; polyglycidyl ether compounds of polynuclear polyhydric phenol compounds such as dihydroxy naphthalene, biphenol, methylene bisphenol (bisphenol F), methylene bis(o-cresol), ethylidene bisphenol, isopropylidene bisphenol (bisphenol A), isopropylidene bis(o-cresol), tetrabromo bisphenol A, 1,3-bis(4-hdyroxycumylbenzene), 1,4-bis (4-hydroxycumylbenzene), 1,1,3-tris(4-hydroxyphenyl)butane, 1,1,2,2,-tetra(4-hydroxyphenyl) ethane, thiobisphenol, sulfobisphenol, oxybisphenol, phenol novolac, ortho-cresol novolac, ethylphenol novolac, butylphenol novolac, octylphenol novolac, resorcin novolac, and terpene phenol; polyglycidyl ethers of polyhydric alcohols such as ethylene glycol, propylene glycol, butylene glycol, hexane diol, polyglycol, thiodiglycol, glycerin, trimethylol propane, pentaerythritol, sorbitol and bisphenol A-ethylene oxide adduct; monopolymers and copolymers of glycidyl esters and glycidyl methacrylate of fatty, aromatic and alicyclic polybasic acids and glycidyl methacrylate such as maleic acid, fumaric acid, itaconic

acid, succinic acid, gultaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid and endomethylene tetrahydrophthalic acid; epoxy compounds having glycidyl amino groups such as N,N-diglycidyl aniline, bis(4-(N-methyl-N-glycidylamino)phenyl) methane and diglycidyl orthotoluidine; epoxy compounds of cyclic olefin compounds such as vinylcyclohexene diepoxide, dicyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate and bis (3,4-epoxy-6-methylcyclohexylmethyl) adipate; epoxydation conjugated diene polymers such as epoxydation polybutadiene and epoxydation styrene-butadiene copolymers and heterocyclic compounds such as triglycidyl isocyanurate.

Of the polyepoxy compounds (d-4-1) that can be used for the present invention having an epoxy equivalent of 150 to 250 g/mol, the use of polyglycidyl ethers of bisphenol compounds such as biphenol, methylene bisphenol (bisphenol F), methylene bis(o-cresol), ethylidene bisphenol, isopropylidene bisphenol (bisphenol A), isopropylidene bis(o-cresol), tetrabromo bisphenol A, 1,3-bis(4-hydroxycumylbenzene), 1,4-bis(4-hydroxycumylbenzene), 1,1,3-tris(4-hydroxyphenyl)butane, 1,1,2,2,-tetra(4-hydroxyphenyl) ethane, thiobisphenol, sulfobisphenol, oxybisphenol and terpene diphenol is preferable to obtain paint film that is excellent in terms of adhesiveness relative to substrate (B).

Examples of commercially available products of polyglycidyl ethers of bisphenol compounds having an epoxy equivalent of 150 to 250 g/mol include Adeka Resin EP-4100E (available from ASAHI DENKA KOGYO KK, bisphnol A diglycidyl ether, epoxy equivalent: 190).

Compounds (d-4) having an epoxy equivalent of 150 to 700 g/mol that can be used for the present invention also include polyolefin-based polymers (d-4-2) having an epoxy equivalent of 500 to 700 g/mol. Of such polyolefin-based polymers, those that have a hydroxyl group at one terminal and into which epoxy groups are introduced are preferable. Of such preferable polymers those that are liquid are more preferable.

Examples of commercially available polymers having an epoxy equivalent of 150 to 700 g/mol include L-207 (KRATON LIQUID (trade name) also named as L-207 POLYMER) available from Kuraray. L-207 is a polymer having an epoxy equivalent of 590 g/mol, a hydroxyl equivalent of 7,000 g/mol and a glass transition temperature of -53°C with a completely saturated skeleton (epoxydation ethylene·propylene-ethylene·butylene-OH structure). The use of this polymer is preferable in terms of adhesiveness relative to substrate (B).

<u>Component (e) at least one radical polymerization initiator selected from a group of organic peroxides, UV reaction initiators and electron beam reaction initiators</u>

The component (e) of hard coat paint according to the present invention is at least one radical polymerization initiator selected from a group of organic peroxides, UV reaction initiators and electron beam reaction initiators.

Examples of UV reaction initiators and electron beam reaction initiators include benzophenone, 2,4-dihydroxy benzophenone, 2-hydroxy-4-methoxy benzophenone, acetophenone, benzoin, benzoin ethyl ether, benzoin-n-propyl ether, benzoin isopropyl ether, benzoin-n-butyl ether, benzoin isobutyl ether, benzyl-1-(4-isopropyl phenyl)-2-hydroxy-2-methylpropane-1-on, 2-hydroxy-2-methyl-1-phenylpropane-1-on, benzyl sulfide, thioxanthone, bis(2,4,6-trimethylbenzoyl)-phenylphosphine oxide and 2-chlorothioxanthone.

An organic peroxide is preferably used when a reaction needs to be accelerated by heating for hard coat paint according to the present invention.

Organic peroxide that can be used for the present invention include dicumyl peroxide, di-tert-butylperoxide, 2,5-dimethyl-2,5-di-(tert-butylperoxy) hexane, 2,5-dimethyl-2,5-di(tert-butylperoxy) hexine-3,1,3-bis(tert-butylperoxy isopropyl) benzene, 1,1-bis(tert-butylperoxy)-3,3,5-trimethyl cyclohexane, n-butyl-4,4-bis(tert-butylperoxy) valerate, benzoyl peroxide, p chlorobenzoyl peroxide, 2,4-dichlorobenzoyl peroxide, tert-butylperoxy benzoate, tert-butylperoxy isopropyl carbonate, diacetyl peroxide, lauroyl peroxide, tert-butylcumyl peroxide, succinic acid peroxide, methylethylketone peroxide and cyclohexanone peroxide.

Of the above-listed compounds, 2,5-dimethyl-2,5-di(tert-butylperoxy) hexane and 2,5-dimethyl-2,5-di(tert-butylperoxy) hexine-3 are most preferable because they are effectively thermoset at ordinary thermosetting temperatures between 100°C to 150°C.

The percentages with regard to the compounding ratio of the components (a), (b), (c), (d) and (e) are preferably such that, when the total mass of the components (a), (b), (c) and (d) is 100 mass%, the component (a) is 10 to 30 mass%, the component (b) is 50 to 75 mass%, the component (c) is 3 to 20 mass% and the component (d) is 0 to 10 mass% while the component (e) is 0.1 to 15 parts by mass relative to the total 100 parts by mass of the components (a), (b), (c) and (d).

Both the pencil hardness and the Taber abrasion of hard coat paint are degraded and additionally, the solvent resistance thereof is also degraded when the percentage ratio of the component (a) exceeds the upper limit. Similarly, the paint becomes brittle and the Taper abrasion thereof is degraded when the percentage ratio of the component (a) falls below the lower limit. Additionally, the water resistance, the solvent resistance and the weather resistance thereof are also degraded.

Hard coat paint becomes brittle and both the pencil hardness and the Taber abrasion thereof are degraded when the percentage ratio of component (b) exceeds the upper limit. Additionally, the water resistance, the solvent resistance and the weather resistance thereof are also degraded. On the other hand, both the pencil hardness and the Taber abrasion of hard coat paint are degraded when the percentage ratio of the component (b) falls below the lower limit.
Hard coat paint contracts excessively to degrade the water resistance thereof when the percentage ratio of component (c) exceeds the upper limit. Additionally, the solvent resistance and the weather resistance thereof are also degraded. On the other hand, both the pencil hardness and the Taper abrasion of hard coat paint are degraded and the viscosity is raised to high to make it difficult to handle the paint when the percentage ratio of the component (c) falls below the lower limit. Additionally, the water resistance, the solvent resistance and the weather resistance thereof are all degraded too.
Hard coat paint becomes softened to degrade the pencil hardness and the Taber abrasion thereof when the component (d) exceeds the upper limit.
Hard coat paint contracts excessively to degrade the water resistance thereof when the percentage ratio of the component (e) exceeds the upper limit. Additionally, the solvent resistance and the weather resistance thereof are also degraded. On the other hand, the hard coat paint does not become hardened when the percentage ratio of the component (e) falls below the lower limit.

The percentages with regard to the compounding ratio of the components (a), (b), (c), (d) and (e) are more preferably such that, when the total mass of the components (a), (b), (c) and (d) is 100 mass%, the component (a) is 15 to 25 mass%, the component (b) is 55 to 70 mass%, the component (c) is 5 to 10 mass% and the component (d) is 0 to 5 mass% while the component (e) is 1 to 10 parts by mass relative to the total 100 parts by mass of the components (a), (b), (c) and (d).

The lower limit of the percentage ratio of the component (d) is more preferably not less than 1 mass%. From the viewpoint of adhesiveness relative to the substrate (B), it is preferably 3 to 10 mass%, more preferably 5 to 10 mass%.

Hard coat paint according to the present invention can be manufactured by mixing the components (a) through (e) to a predetermined ratio and subsequently agitating the mixture by means of an appropriate agitator (for example, Mazerustar KK-250S available from Kurabo, in which an agitator and a deforming apparatus are harmoniously combined).

Hard coat paint according to the present invention shows a level of viscosity that is advantageous to any painting operations without being diluted with an organic solvent. For example, hard coat paint according to the present invention shows a viscosity of 20 to 2,000 mPa·s, preferably 100 to 1,000 mPa·s at 25°C (when observed by means of a B-type viscometer). If necessary, it may be diluted with an organic solvent.
Whenever necessary, a polymerization accelerator, an inorganic filling agent, pigments and/or other agents can be appropriately compounded with hard coat paint according to the present invention.

To form a hard coat layer with hard coat paint according to the present invention, the hard coat paint is applied onto a substrate by means of a technique selected from spin coating, (doctor) knife coating, micro-gravure coating, direct gravure coating, offset gravure coating, reverse gravure coating, reverse roll coating, (Meyer) bar coating, dye coating, spray coating, dip coating and so on (for example, manual spinner Type ASS-301 available from Able Co., Ltd. may be used) and, if a UV reaction initiator or an electron beam reaction initiator is employed as component (e), the applied paint is hardened by irradiating UV rays or electron beams. When UV rays are employed as component (e), the conditions of irradiation may typically include irradiation intensity between 150 to 1,000 mJ/cm$^2$ and irradiation time between 1 to 60 seconds. If, on the other hand, an organic peroxide is employed as component (e), a technique of hardening the applied paint by heating it to 100 to 150°C may be used.

The thickness of a hard coat layer is between 0.5 to 20 μm, preferably between 1.5 to 10 μm, more preferably between 2.0 to 10 μm from the viewpoint of cost and performance.
A hard coat layer obtained in the above-described way shows a hardness of not less than pencil hardness F, preferably not less than pencil hardness H.

Hard coat paint according to the present invention can form a hard coat layer on any of various substrates (B) made of, for example, glass, polycarbonate, acryl-based resins (e.g., polymethyl methacrylate PMMA), polyester-based resins (e.g., polyethylene terephthalate PET), soft and hard vinyl chloride resins and styrene resins (e.g., acrylonitrile-butadiene-styrene copolymer ABS and polystyrene resins PS) with a high degree of adhesiveness without using a primer, although it has conventionally been impossible to form a hard coat layer on such substrates without using a special primer. (Even a higher degree of adhesiveness can be achieved when a primer is used on the substrate provided that the use of a primer is permissible in terms of cost).

A molded body formed by arranging a hard coat layer (A) that is formed by hard coat paint according to the invention on substrate (B) is useful for windshield glass, safety glass, vehicle headlight lenses, display panels, panel covers of various types of equipment, vehicle glass and various plastic products.

[Examples]

Now, the present invention will be described further by way of examples and comparative examples, although the present invention is by no means limited by the examples described below.
The materials used in the examples and the comparative examples are listed below.

Component (a-1) vinyl ester resin

(i) urethane acrylate

CN975: aromatic urethane acrylate, type = polyester, 60°C viscosity = 500, number of functional groups = 6, available from Sartomer Company

(ii) polyester acrylate

CN292: polyester acrylate, type = aliphatic polyester, 25°C viscosity = 630, number of functional groups = 4, available from Sartomer Company

(iii) epoxy acrylate

CNUVE151: epoxy acrylate, type = polyester, 25°C viscosity = 150, 000, number of functional groups = 2, available from Sartomer Company

(iv) urethane acrylate

CN963B80: urethane acrylate (1,6-hexanediolacrylate HDDA blend), type = polyester, 60°C viscosity = 1,100, number of functional groups = 2, available from Sartomer Company

Component (a-2) unsaturated polyester resin

RIGOLAC 21E-A-2 (trade name): available from Showa Highpolymer Co., Ltd.

Component (b-1) compound having a ring structure and an ethylenic unsaturated group

(i) N-vinyl caprolactam: available from BASF SE

boiling point: 117°C (10 mm Hg)
vapor pressure: $< 0.1$ mm Hg (20°C)
flash point: 110°C
melting point: 35°C
viscosity: 3.5 cps (40°C)

Component (b-2) diacrylate monomer

(i) dipropylene glycol diacrylate (DPGDA) : available from BASF SE
(ii) tripropylene glycol diacrylate (TPGDA) : available from BASF SE

Component (c) monomer having a ring structure and at least one ethylenic unsaturated group in a molecule

(c-1) dicyclopentadiene: available from ZEON CORPORATION
(c-2) 1,4-cyclohexane dimethanol divinyl ether (CHDM): available from BASF SE

Component (d) modifying agent

(d-1-2) polybutadiene-based polyol

Poly bd R-15HT: available from Idemitsu Co., Ltd.
viscosity: 1.5 Pa·s/30°C, hydroxyl value: 102.7 mgKOH/g

(d-1-1-1) aromatic castor oil-based polyol

URIC (trade name) AC-006: available from Itoh Oil Chemicals Co., Ltd. castor oil-based polyol expressed by formula (4), viscosity: 0.7 to 1.5 Pa·s/25°C, hydroxyl value: 194 to 214 mgKOH/g

(d-1-3) polyisoprene-based polyol

Poly ip (trade name): availavle from Idemitsu Co., Ltd., polyisoprene type liquid polymer having a highly reactive hydroxyl group at molecular terminal (hydroxyl value: 46.6 mgKOH/mg, number-average molecular weight Mn = 2,500)

(d-2-1) castor oil-based polyol

URIC H-1262: available from Itoh Oil Chemicals Co., Ltd. Polyol containg castor oil-based polyols and acid phosphate ester compounds having a total number of carbon atoms of not less than 12, viscosity: 3, 500 to 8,500 Pa·s/25°C, acid value: 4 to 15 (unit mgKOH/g), hydroxyl value: 240 to 290 (unit mgKOH/g)

(d-2-1) castor oil-based polyol

URIC H-2151U: available from Itoh Oil Chemicals Co., Ltd. Polyol contailing castor oil-based polyols, acid phosphate ester compounds having a total number of carbon atoms of not less than 12 and terpene phenols, viscosity: 3,500 to 8,500 Pa·s/25°C, acid value: 4 to 15 (unit mgKOH/g), hydroxyl value: 240 to 290 (unit mgKOH/g)

(d-1-3) hydrogen adduct of polyisoprene-based polyol

Epol (trade name): available from Idemitsu Co., Ltd., hydroxyl-terminated liquid polyolefin (viscosity (Pa·s/30°C: 75), hydroxyl value (mgKOH/g): 50.5, number-average molecular weight: 2,500)

(d-3-1) maleated polyolefin

LIR-420: available from Kuraray Co., Ltd. (acid value (mgKOH/g): 40)

(d-3-2) maleic acid-modified polybutadiene

Ricon 130MA8: available from Sartomer Co.
(viscosity (Pa·s/30°C: 6.5), acid value (mgKOH/g): 46, number-average molecular weight: 2,700)

(d-3-2) maleic acid-modified polybutadiene

POLYVEST (trade name) OC 800 S: available from EVONIK Industries (1,4-cis double-bond: 75%, 1,4-trans double-bond: 24%, vinyl bond: 1%, maleation percentage ratio: 7.5%, number-average molecular weight: 3,300 (GPC), weight-average molecular weight: 13,600 (GPC), viscosity (20°C) : 6 to 9 Pa·s (as observed according to DIN53214), acid value: 70 to 90 mgKOH/g, iodine value; 380 to 420 g/100 g (polymerized with Ziegler-Natta catalyst))

(d-1-4) epoxy polyol resin

EPICLON (trade name) U-125-60BT: available from DIC Co., Ltd.
(viscosity (Pa·s/30°C): 70, hydroxyl value (mgKOH/g): 120)

(d-4-1) polyepoxy compound having epoxy equivalent of 150 to 250 g/mol

Adeka Resin EP-4100E (available from ADEKA, bisphnol A diglycidyl ether, epoxy equivalent: 190)

(d-4-2) polymer having saturated skeleton with epoxy equivalent of 500 to 700 g/mol

L-207 (KRATON LIQUID (trade name)) : available from Kuraray. (a polymer having an epoxy equivalent of 590 g/mol, a hydroxyl equivalent of 7, 000 g/mol and a glass transition temperature of -53°C with a completely saturated skeleton (epoxidized ethylene·propylene-ethylene·butylene-OH structure)

The adopted methods of measuring the properties of each polyol will be described below.

· Viscosity measurement method

A single cylinder-type rotational viscometer (B type TVC-5) was employed as viscometer according to JIS K7117-1 to measure the viscosity of each polyol.

1. A 500 ml beaker (standard) was used as measuring instrument.
2. As standard rotors, two rotors were selected from M1 to M4 rotors for low to medium viscosities and H1 to H7 rotors for medium to high viscosities.

· Hydroxyl value measurement method

The hydroxyl value is the milligrams of potassium hydroxide required for acetylation of the OH groups contained in 1 g of a sample. According to JIS K 1557-1, the OH groups in each sample were acetylated by means of acetic anhydride and the unconsumed acetic acid was titrated by means of potassium hydroxide solution.

[Math 1]

$$\text{hydroxyl value} = \frac{(A-B)\times f \times 28.05}{sample(g)} + \text{acid value}$$

A: the amount of 0.5 mol/ℓ potassium hydroxide ethanol solution (mℓ) consumed in a blank test
B: the amount of 0.5 mol/ℓ potassium hydroxide ethanol solution (mℓ) consumed for titration
f: factor

· Acid value measurement method

The acid value is the milligrams of potassium hydroxide required to neutralization of the acidic components contained in 1 g of a sample.

According to JIS K 1557-5,

(1) Measurement of end point pH

10 mL of buffer stock solution B was taken into a 200 mL beaker, to which 100 mL of a titration solvent was added, and electrodes were dipped into it. The pH that changed within 0.1 pH in 30 seconds was determined as buffer end point.

(2) Measurement of acid value

1. 20 g of a sample was accurately measured and taken into a 200 mL beaker.

2. 125 mL of toluene·2-propanol·pure water mixture solvent was added and titrated with titration solution of 0.1 mol/L potassium hydroxide.

As a result of (1), 11.72 pH was selected as end point and the acid value was determined by means of the formula shown below. The same procedures were followed for a blank.

Acid value (mgKOH/g) = (D-B) × K × F × M/S
D: titration value (mL)
B: blank (0.085 mL)
K: KOH molecular weight (56.1)
F: factor of titration solution (1.000)
M: molar concentration of titration solution (0.1 mol/L)
S: amount of extracted sample (g)

Component (e) component radical polymerization initiator <u>(i) Photopolymerization initiator</u>

IRGACURE (trade name) 819: available from CIBA Corporation bis(2,4,6-trimethylbenzoyl)-phenylphosphine oxide

<u>(ii) Thermal polymerization initiator</u>

PERHEXA 25B: available from NOF Corporation (1 minute half life temperature: 179°C), 2,5-dimethyl-2,5-di (tert-butyl peroxy) hexane

Examples 1 to 27, Comparative Examples 1 to 8

For each of the examples and the comparative examples, the components (a) through (c) were put into a vessel equipped with an agitator to the corresponding compounding ratio (parts by mass) shown in Table 1 through 8 and thoroughly agitated at room temperature. Thereafter, the component (d) was added and agitated, when the liquid temperature got to room temperature, the component (e) was added. The liquid mixture was thoroughly agitated until no undissolved components were found to obtain a sample of target hard coat paint. The viscosity (mPa·s) at 25°C of the obtained adhesive composition was observed. More specifically, TVC-7 rotational viscometer (available from Tokisangyo Co. Jp.), which is a handy type digital viscometer, and a rotor that matches the expected viscosity (No. 0 to No. 5) were employed to observe the viscosity at 25°C. The obtained results are also shown in Tables 1 through 8.

Then, the obtained hard coat paint was applied onto each of the substrates (B) shown in Table 1 (size: 150 mm × 25 mm × thickness 1 mm) by spin coating (to a thickness of 10 μm) and hardened in air by irradiating UV rays at an energy level of 500 mJ/cm$^2$ to prepare a layered product. When a thermal polymerization initiator was used, 0 to 0.05 parts by mass of 6% cobalt naphthenate was added as necessary to the composition and the composition was heat treated and hardened at 100°C for 30 minutes.

Evaluation

(Viscosity)

The viscosity of each sample was observed by means of a TVC-7 type rotational viscometer at 25°C according to JIS K7233. The used unit was mPa·S and the viscosity of the hardener composition was evaluated as described below from the viewpoint of maintaining its working property without using any solvent.

○: The viscosity is not more than 1,000 mPa·S/25°C and hence practically feasible.
Δ: The viscosity is between 1,000 and 2,000 mPa·S/25°C and hence practically not desirable because the working temperature range is limited.
×: The viscosity is not less than 2,000 mPa·S/25°C and hence shows a poor working property so that it needs to be diluted with a solvent at or below room temperature.

(Measurement of haze value and total light transmittance)

For each obtained hard coat paint product, the values were measured with a coating sample prepared by using a glass substrate by means of a measurement instrument (trade name "COH-300A") available from Nippon Denshoku

Kogyo Co., Ltd.

(Measurement of pencil hardness)

For each obtained hard coat paint product, the pencil hardness was measured with a coating sample prepared by using a glass substrate by a method conforming to the pencil hardness measurement method defined in JIS K 5400. Whether each sample had a scar or not was observed with the naked eye of the measurer according to the above standard. However, when presence or absence of a scar entailed a delicate judgment, the depth of each possible scar (recess) was measured by means of a commercially available stylus type surface roughness tester and "appearance of a scar" was determined when the average value of the depths measured at five different points was not less than 0.2 μm.

(Measurement of Taber abrasion)

For each obtained hard coat paint product, Taber abrasion test (CS-10 polishing paper, 500 g, 20 times) was conducted on each coating sample prepared by using a PC (polycarbonate) substrate and subsequently the coating sample was evaluated for Taber abrasion, based on the difference (ΔH) of the haze values of the coat film before and after the abrasion test as determined by using the formula shown below.

$$\text{haze (\%)} = (\text{diffuse transmittance}/\text{total light transmittance}) \times 100$$

(Adhesion test)

An adhesion test was conducted to observe the adhesion relative to each substrate by means of a test conforming to the cross-cut tape test defined in JIS K 5400.
Cross-cut tape test (application thickness 10 μm (spin coating)) : 1 × 1 mm square scars by using a cutter-knife were formed by cross cutting on the test surface (hard coat layer (A) side). A cutter guide was employed. The number of square cross cuts was longitudinal 10 × transversal 10 = 100. A cellophane tape was pressed hard against and made adhering to the areas of square cross cuts and the tape was pulled off rapidly at the end at an angle of 45° to observe the condition of each of the square cross cuts (and find out the number of square cross cuts that were left unpeeled).

(Water resistance test)

Each sample on the corresponding substrate was immersed in boiled water (pure water) for an hour and dried naturally. The dried sample was visually observed for deterioration of appearance of the hard coat layer.

○: Neither paint peeling nor paint cracking was observed (after 1 hour immersion).
×: Paint peeling and paint cracking were observed (after 1 hour immersion).

(Weather resistance test)

Each sample on the corresponding substrate was exposed to cycles of 12-minute rain fall and 48-minute drying for 2,000 hours at black panel temperature of 63°C by means of a sun shine weather meter and the appearance thereof was observed.

○: no appearance change observed
×: bleaching, yellowing, peeling observed

(Solvent resistance test)

The film coat on each substrate was rubbed with absorbent cotton dipped with xylene for 100 times and the appearance was visually observed and rated according to the rating system shown below.

○: good
Δ: film coat slightly peeled
×: film coat broadly peeled

The results are shown in Table 1.

Table 1

| | | Example | Example | Example | Example | Example |
|---|---|---|---|---|---|---|
| component | | 1 | 2 | 3 | 4 | 5 |
| (a-1) (i) | CN975 urethane acrylate available from Sartomer Co. | 25 | 25 | 25 | 25 | 25 |
| (a-1) (ii) | CN292 polyester acrylate available from Sartomer Co. | | | | | |
| (a-1) (iii) | CNUVE15 epoxy acrylate available from Sartomer Co. | | | | | |
| (a-1) (iv) | CN963B80 urethane acrylate available from Sartomer Co. | | | | | |
| (a-2) | LIGOLAC21 E-A-2 available from Showa Highpolymer Co. | | | | | |
| (b-1) (i) | N-vinyl caprolactam | 65 | 65 | 20 | 20 | 45 |
| (b-2) (i) | dipropylene glycol diacrylate (DPGDA) | | | 45 | | 20 |
| (b-2) (ii) | tripropylene glycol diacrylate (TPGDA) | | | | 45 | |
| (c-1) | dicyclopentadiene | 10 | | 10 | 10 | 10 |
| (c-2) | CHDM | | 10 | | | |
| (d-1-2) | polybutadiene polyol Poly bd R-15HT | | | | | |
| (d-1-1-1) | aromatic castor oil-based polyol URIC AC-006 | | | | | |
| (d-1-3) | polyisoprene-based polyol Poly ip | | | | | |
| (d-2-1) | castor oil-based polyol URIC H-1262 | | | | | |
| (d-2-1) | castor oil-based polyol URIC H-2151U | | | | | |
| (d-1-3) | hydroxy-terminated liquid polyolefin Epol | | | | | |
| (d-3-1) | maleated polyisoprene LIR-420 | | | | | |
| (d-3-2) | maleic acid modified polybutadiene Ricon130MA8 | | | | | |
| (d-3-2) | S | | | | | |
| (d-1-4) | epoxy polyol EPICLON U-125-60BT | | | | | |
| (d-4-1) | polyepoxy compound ADEKA RESIN EP-41 OOE | | | | | |
| (d-4-2) | L-207 | | | | | |
| (e) (i) | IRGACURE 819 | 5 | 5 | 5 | 5 | 5 |
| (e) (ii) | PERHEXA 25B | | | | | |

(continued)

| | | Example | Example | Example | Example | Example |
|---|---|---|---|---|---|---|
| | Total (parts by mass) | 105 | 105 | 105 | 105 | 105 |
| Evaluation result | viscosity mPa.s(25°C) | 760 | 760 | 770 | 770 | 760 |
| | haze value % (glass coat) | 0.8 | 1 | 0.8 | 0.8 | 0.9 |
| | total light transmittance % (glass coat) | 89 | 87 | 89 | 89 | 90 |
| | pencil hardness (glass coat) | 3H | 2H | 5H | 5H | 3H |
| | taber abrasion (ΔH) % (PC coat) | 1.9 | 2.5 | 2.2 | 2.2 | 2.6 |
| | adhesion test | | | | | |
| | glass | 100 | 100 | 95 | 95 | 98 |
| | PC | 100 | 100 | 100 | 100 | 100 |
| | PMMA | 100 | 100 | 95 | 98 | 95 |
| | PET | 100 | 100 | 100 | 100 | 100 |
| | hard PVC | 100 | 100 | 100 | 100 | 100 |
| | soft PVC | 100 | 100 | 100 | 100 | 100 |
| | ABS | 100 | 100 | 100 | 100 | 100 |
| | PS | 100 | 100 | 98 | 98 | 98 |
| | water resistance test | | | | | |
| | glass | ○ | ○ | ○ | ○ | ○ |
| | PC | ○ | ○ | ○ | ○ | ○ |
| | PMMA | ○ | ○ | ○ | ○ | ○ |
| | PET | ○ | ○ | ○ | ○ | ○ |
| | hard PVC | ○ | ○ | ○ | ○ | ○ |
| | soft PVC | ○ | ○ | ○ | ○ | ○ |
| | ABS | ○ | ○ | ○ | ○ | ○ |
| | PS | ○ | ○ | ○ | ○ | ○ |
| | weather resistance test | | | | | |
| | glass | ○ | ○ | ○ | ○ | ○ |
| | PC | ○ | ○ | ○ | ○ | ○ |
| | PMMA | ○ | ○ | ○ | ○ | ○ |
| | PET | ○ | ○ | ○ | ○ | ○ |
| | hard PVC | ○ | ○ | ○ | ○ | ○ |
| | soft PVC | ○ | ○ | ○ | ○ | ○ |
| | ABS | ○ | ○ | ○ | ○ | ○ |
| | PS | ○ | ○ | ○ | ○ | ○ |
| | solvent resistance test | | | | | |
| | glass | ○ | ○ | ○ | ○ | ○ |
| | PC | ○ | ○ | ○ | ○ | ○ |
| | PMMA | ○ | ○ | ○ | ○ | ○ |

(continued)

| | | Example | Example | Example | Example | Example |
|---|---|---|---|---|---|---|
| | PET | ○ | ○ | ○ | ○ | ○ |
| | hard PVC | ○ | ○ | ○ | ○ | ○ |
| | soft PVC | ○ | ○ | ○ | ○ | ○ |
| | ABS | ○ | ○ | ○ | ○ | ○ |
| | PS | ○ | ○ | ○ | ○ | ○ |

Table 2

| | | Example | Example | Example | Example | Example |
|---|---|---|---|---|---|---|
| component | | 6 | 7 | 8 | 9 | 10 |
| (a-1) (i) | CN975 urethane acrylate available from Sartmer Co. | 25 | | | | |
| (a-1) (ii) | CN292 polyester acrylate available from Sartomer Co. | | 25 | | | 25 |
| (a-1) (iii) | CNUVE151 epoxy acrylate available from Sartmer Co. | | | 25 | | |
| (a-1) (iv) | CN963B80 urethane acrylate available from Sartmer Co. | | | | 25 | |
| (a-2) | LIGOLAC21 E-A-2 available from Showa Highpolymer Co. | | | | | |
| (b-1) (i) | N-vinyl caprolactam | 10 | 65 | 65 | 65 | 10 |
| (b-2) (i) | dipropylene glycol diacrylate (DPGDA) | 50 | | | | 50 |
| (b-2) (ii) | tripropylene glycol diacrylate (TPGDA) | | | | | |
| (c-1) | dicyclopentadiene | 10 | 10 | 10 | 10 | 10 |
| (c-2) | CHDM | | | | | |
| (d-1-2) | polybutadiene polyol Poly bd R-15HT | | | | | |
| (d-1-1-1) | aromatic castor oil-based polyol URIC AC-006 | 5 | | | | 5 |
| (d-1-3) | polyisoprene-based polyol Poly ip | | | | | |
| (d-2-1) | castor oil-based polyol URIC H-1262 | | | | | |
| (d-2-1) | castor oil-based polyol URIC H-2151U | | | | | |
| (d-1-3) | hydroxy-terminated liquid polyolefin Epol | | | | | |
| (d-3-1) | maleated polyisoprene LIR-420 | | | | | |
| (d-3-2) | maleic acid modified polybutadiene Ricon130MA8 | | | | | |
| (d-3-2) | S | | | | | |

(continued)

| | | Example | Example | Example | Example | Example |
|---|---|---|---|---|---|---|
| (d-1-4) | epoxy polyol EPICLON U-125-60BT | | | | | |
| (d-4-1) | polyepoxy compound ADEKA RESIN EP-4100E | | | | | |
| (d-4-2) | L-207 | | | | | |
| (e) (i) | IRGACURE 819 | 5 | 5 | 5 | | 5 |
| (e) (ii) | PERHEXA 25B | | | | 1 | |
| | Total (parts by mass) | 105 | 105 | 105 | 101 | 105 |
| Evaluation result | viscosity mPa.s(25°C) | 860 | 170 | 1500 | 1250 | 270 |
| | haze value % (glass coat) | 0.8 | 0.9 | 0.9 | 0.9 | 0.8 |
| | total light transmittance % (glass coat) | 89 | 90 | 90 | 90 | 89 |
| | pencil hardness (glass coat) | 2H | 3H | H | H | H |
| | taber abrasion (ΔH) % (PC coat) | 2.1 | 2.9 | 2.9 | 2.9 | 2.1 |
| | adhesion test | | | | | |
| | glass | 100 | 100 | 100 | 100 | 100 |
| | PC | 100 | 100 | 100 | 100 | 100 |
| | PMMA | 100 | 100 | 100 | 100 | 100 |
| | PET | 100 | 100 | 100 | 100 | 100 |
| | hard PVC | 100 | 100 | 100 | 100 | 100 |
| | soft PVC | 100 | 100 | 100 | 100 | 100 |
| | ABS | 100 | 100 | 100 | 100 | 100 |
| | PS | 100 | 100 | 100 | 100 | 100 |
| | water resistance test | | | | | |
| | glass | O | O | O | O | O |
| | PC | O | O | O | O | O |
| | PMMA | O | O | O | O | O |
| | PET | O | O | O | O | O |
| | hard PVC | O | O | O | O | O |
| | soft PVC | O | O | O | O | O |
| | ABS | O | O | O | O | O |
| | PS | O | O | O | O | O |
| | weather resistance test | | | | | |
| | glass | O | O | O | O | O |
| | PC | O | O | O | O | O |
| | PMMA | O | O | O | O | O |
| | PET | O | O | O | O | O |
| | hard PVC | O | O | O | O | O |
| | soft PVC | O | O | O | O | O |

(continued)

| | | Example | Example | Example | Example | Example |
|---|---|---|---|---|---|---|
| | ABS | O | O | O | O | O |
| | PS | O | O | O | O | O |
| | solvent resistance test | | | | | |
| | glass | O | O | O | O | O |
| | PC | O | O | O | O | O |
| | PMMA | O | O | O | O | O |
| | PET | O | O | O | O | O |
| | hard PVC | O | O | O | O | O |
| | soft PVC | O | O | O | O | O |
| | ABS | O | O | O | O | O |
| | PS | O | O | O | O | O |

Table 3

| | | Example | Example | Example | Example | Example |
|---|---|---|---|---|---|---|
| Component | | 11 | 12 | 13 | 14 | 15 |
| (a-1) (i) | CN975 urethane acrylate available from Sartomer Co. | | | 25 | 25 | 25 |
| (a-1) (ii) | CN292 polyester acrylate available from Sartomer Co. | | | | | |
| (a-1) (iii) | CNUVE151 epoxy acrylate available from Sartomer Co. | 25 | | | | |
| (a-1) (iv) | CN963B80 urethane acrylate available from Satomer Co. | | 25 | | | |
| (a-2) | LIGOLAC21 E-A-2 available from Showa Highpolymer Co. | | | | | |
| (b-1) (i) | N-vinyl caprolactam | 10 | 10 | 10 | 10 | 10 |
| (b-2) (i) | dipropylene glycol diacrylate (DPGDA) | 50 | 50 | 50 | 50 | 50 |
| (b-2) (ii) | tripropylene glycol diacrylate (TPGDA) | | | | | |
| (c-1) | dicyclopentadiene | 10 | 10 | 10 | 10 | 10 |
| (c-2) | CHDM | | | | | |
| (d-1-2) | polybutadiene polyol Poly bd R-15HT | | | 5 | | |
| (d-1-1-1) | aromatic castor oil-based polyol URIC AC-006 | 5 | 5 | | | |
| (d-1-3) | polyisoprene-based polyol Poly ip | | | | 5 | |
| (d-2-1) | castor oil-based polyol URIC H-1262 | | | | | 5 |
| (d-2-1) | castor oil-based polyol URIC H-2151U | | | | | |

(continued)

| | | Example | Example | Example | Example | Example |
|---|---|---|---|---|---|---|
| (d-1-3) | hydroxy-terminated liquid polyolefin Epol | | | | | |
| (d-3-1) | maleated polyisoprene LIR-420 | | | | | |
| (d-3-2) | maleic acid modified polybutadiene Ricon130MA8 | | | | | |
| (d-3-2) | S | | | | | |
| (d-1-4) | epoxy polyol EPICLON U-125-60BT | | | | | |
| (d-4-1) | polyepoxy compound ADEKA RESIN EP-4100E | | | | | |
| (d-4-2) | L-207 | | | | | |
| (e) (i) | IRGACURE 819 | 5 | 5 | 5 | 5 | 5 |
| (e) (ii) | PERHEXA 25B | | | | | |
| | Total (parts by mass) | 105 | 105 | 105 | 105 | 105 |
| Evaluation result | viscosity mPa.s(25°C) | 1500 | 1360 | 800 | 820 | 820 |
| | haze value % (glass coat) | 0.8 | 0.8 | 0.8 | 0.8 | 0.8 |
| | total light transmittance % (glass coat) | 89 | 89 | 89 | 89 | 89 |
| | pencil hardness (glass coat) | F | H | 2H | 2H | 2H |
| | taber abrasion (ΔH) % (PC coat) | 2.1 | 2.1 | 2.1 | 2.1 | 2.1 |
| | adhesion test | | | | | |
| | glass | 100 | 100 | 100 | 100 | 100 |
| | PC | 100 | 100 | 100 | 100 | 100 |
| | PMMA | 100 | 100 | 100 | 100 | 100 |
| | PET | 100 | 100 | 100 | 100 | 100 |
| | hard PVC | 100 | 100 | 100 | 100 | 100 |
| | soft PVC | 100 | 100 | 100 | 100 | 100 |
| | ABS | 100 | 100 | 100 | 100 | 100 |
| | PS | 100 | 100 | 100 | 100 | 100 |
| | water resistance test | | | | | |
| | glass | O | O | O | O | O |
| | PC | O | O | O | O | O |
| | PMMA | O | O | O | O | O |
| | PET | O | O | O | O | O |
| | hard PVC | O | O | O | O | O |
| | soft PVC | O | O | O | O | O |
| | ABS | O | O | O | O | O |
| | PS | O | O | O | O | O |
| | weather resistance test | | | | | |
| | glass | O | O | O | O | O |

(continued)

| | | Example | Example | Example | Example | Example |
|---|---|---|---|---|---|---|
| | PC | O | O | O | O | O |
| | PMMA | O | O | O | O | O |
| | PET | O | O | O | O | O |
| | hard PVC | O | O | O | O | O |
| | soft PVC | O | O | O | O | O |
| | ABS | O | O | O | O | O |
| | PS | O | O | O | O | O |
| | solvent resistance test | | | | | |
| | glass | O | O | O | O | O |
| | PC | O | O | O | O | O |
| | PMMA | O | O | O | O | O |
| | PET | O | O | O | O | O |
| | hard PVC | O | O | O | O | O |
| | soft PVC | O | O | O | O | O |
| | ABS | O | O | O | O | O |
| | PS | O | O | O | O | O |

Table 4

| | | Example | Example | Example | Example | Example |
|---|---|---|---|---|---|---|
| Component | | 16 | 17 | 18 | 19 | 20 |
| (a-1) (i) | CN975 urethane acrylate available from Sartomer Co. | 25 | 25 | 25 | 25 | 25 |
| (a-1) (ii) | CN292 polyester acrylate available from Sartomer Co. | | | | | |
| (a-1) (iii) | CNUVE151 epoxy acrylate available from Sartomer Co. | | | | | |
| (a-1) (iv) | CN963B80 urethane acrylate available from Sartomer Co. | | | | | |
| (a-2) | LIGOLAC21 E-A-2 available from Showa Highpolymer Co. | | | | | |
| (b-1) (i) | N-vinyl caprolactam | 10 | 10 | 10 | 10 | 10 |
| (b-2) (i) | dipropylene glycol diacrylate (DPGDA) | 50 | 50 | 50 | 50 | 50 |
| (b-2) (ii) | tripropylene glycol diacrylate (TPGDA) | | | | | |
| (c-1) | dicyclopentadiene | 10 | 10 | 10 | 10 | 10 |
| (c-2) | CHDM | | | | | |
| (d-1-2) | polybutadiene polyol Poly bd R-15HT | | | | | |

(continued)

| | | Example | Example | Example | Example | Example |
|---|---|---|---|---|---|---|
| (d-1-1-1) | aromatic castor oil-based polyol URIC AC-006 | | | | | |
| (d-1-3) | polyisoprene-based polyol Poly ip | | | | | |
| (d-2-1) | castor oil-based polyol URIC H-1262 | | | | | |
| (d-2-1) | castor oil-based polyol URIC H-2151U | 5 | | | | |
| (d-1-3) | hydroxy-terminated liquid polyolefin Epol | | 5 | | | |
| (d-3-1) | maleated polyisoprene LIR-420 | | | 5 | | |
| (d-3-2) | maleic acid modified polybutadiene Ricon130MA8 | | | | 5 | |
| (d-3-2) | S | | | | | 5 |
| (d-1-4) | epoxy polyol EPICLON U-125-60BT | | | | | |
| (d-4-1) | polyepoxy compound ADEKA RESIN EP-4100E | | | | | |
| (d-4-2) | L-207 | | | | | |
| (e) (i) | IRGACURE 819 | 5 | 5 | 5 | 5 | 5 |
| (e) (ii) 1> | PERHEXA 25B | | | | | |
| | Total (parts by mass) | 105 | 105 | 105 | 105 | 105 |
| Evaluation result | viscosity mPa.s(25°C) | 830 | 850 | 900 | 800 | 800 |
| | haze value % (glass coat) | 0.8 | 0.8 | 0.8 | 0.8 | 0.8 |
| | total light transmittance % (glass coat) | 89 | 89 | 89 | 89 | 89 |
| | pencil hardness (glass coat) | 2H | 2H | 2H | 2H | 2H |
| | taber abrasion (ΔH) % (PC coat) | 2.1 | 2.1 | 2.1 | 2.1 | 2.1 |
| | adhesion test | | | | | |
| | glass | 100 | 100 | 100 | 100 | 100 |
| | PC | 100 | 100 | 100 | 100 | 100 |
| | PMMA | 100 | 100 | 100 | 100 | 100 |
| | PET | 100 | 100 | 100 | 100 | 100 |
| | hard PVC | 100 | 100 | 100 | 100 | 100 |
| | soft PVC | 100 | 100 | 100 | 100 | 100 |
| | ABS | 100 | 100 | 100 | 100 | 100 |
| | PS | 100 | 100 | 100 | 100 | 100 |
| | water resistance test | | | | | |
| | glass | O | O | O | O | O |
| | PC | O | O | O | O | O |
| | PMMA | O | O | O | O | O |
| | PET | O | O | O | O | O |
| | hard PVC | O | O | O | O | O |

(continued)

| | | Example | Example | Example | Example | Example |
|---|---|---|---|---|---|---|
| | soft PVC | O | O | O | O | O |
| | ABS | O | O | O | O | O |
| | PS | O | O | O | O | O |
| | weather resistance test | | | | | |
| | glass | O | O | O | O | O |
| | PC | O | O | O | O | O |
| | PMMA | O | O | O | O | O |
| | PET | O | O | O | O | O |
| | hard PVC | O | O | O | O | O |
| | soft PVC | O | O | O | O | O |
| | ABS | O | O | O | O | O |
| | PS | O | O | O | O | O |
| | solvent resistance test | | | | | |
| | glass | O | O | O | O | O |
| | PC | O | O | O | O | O |
| | PMMA | O | O | O | O | O |
| | PET | O | O | O | O | O |
| | hard PVC | O | O | O | O | O |
| | soft PVC | O | O | O | O | O |
| | ABS | O | O | O | O | O |
| | PS | O | O | O | O | O |

Table 5

| | | Example | Example | Example | Example | Example |
|---|---|---|---|---|---|---|
| Component | | 21 | 22 | 23 | 24 | 25 |
| (a-1) (i) | CN975 urethane acrylate available from Sartomer Co. | 25 | 25 | 25 | | 25 |
| (a-1) (ii) 1> | CN292 polyester acrylate available from Sartomer Co. | | | | | |
| (a-1) (iii) | CNUVE151 epoxy acrylate available from Sartomer Co. | | | | | |
| (a-1) (iv) | CN963B80 urethane acrylate available from Sartomer Co. | | | | | |
| (a-2) | LIGOLAC21 E-A-2 available from Showa Highpolymer Co. | | | | 25 | |
| (b-1) (i) | N-vinyl caprolactam | 10 | 10 | 10 | 65 | 65 |
| (b-2) (i) | dipropylene glycol diacrylate (DPGDA) | 50 | 50 | 50 | | |

(continued)

| | | Example | Example | Example | Example | Example |
|---|---|---|---|---|---|---|
| (b-2) (ii) | tripropylene glycol diacrylate (TPGDA) | | | | | |
| (c-1) | dicyclopentadiene | 10 | 10 | 10 | 10 | 10 |
| (c-2) | CHDM | | | | | |
| (d-1-2) | polybutadiene polyol Poly bd R-15HT | | | | | |
| (d-1-1-1) | aromatic castor oil-based polyol URIC AC-006 | | | | | |
| (d-1-3) | polyisoprene-based polyol Poly ip | | | | | |
| (d-2-1) | castor oil-based polyol URIC H-1262 | | | | | |
| (d-2-1) | castor oil-based polyol URIC H-2151U | | | | | |
| (d-1-3) | hydroxy-terminated liquid polyolefin Epol | | | | | |
| (d-3-1) | maleated polyisoprene LIR-420 | | | | | |
| (d-3-2) | maleic acid modified polybutadiene Ricon130MA8 | | | | | |
| (d-3-2) | S | | | | | |
| (d-1-4) | epoxy polyol EPICLON U-125-60BT | 5 | | | | |
| (d-4-1) | polyepoxy compound ADEKA RESIN EP-4100E | | 5 | | | |
| (d-4-2) | L-207 | | | 5 | | |
| (e) (i) | IRGACURE 819 | 5 | 5 | 5 | 5 | 10 |
| (e) (ii) | PERHEXA 25B | | | | | |
| | Total (parts by mass) | 105 | 105 | 105 | 105 | 110 |
| Evaluation result | viscosity mPa.s(25°C) | 830 | 850 | 800 | 1600 | 780 |
| | haze value % (glass coat) | 0.8 | 0.8 | 0.8 | 0.8 | 0.9 |
| | total light transmittance % (glass coat) | 89 | 89 | 89 | 88 | 88 |
| | pencil hardness (glass coat) | 2H | 2H | H | F | 2H |
| | taber abrasion (ΔH) % (PC coat) | 2.1 | 2.1 | 2.1 | 2.2 | 1.8 |
| | adhesion test | | | | | |
| | glass | 100 | 100 | 100 | 100 | 100 |
| | PC | 100 | 100 | 100 | 100 | 100 |
| | PMMA | 100 | 100 | 100 | 100 | 100 |
| | PET | 100 | 100 | 100 | 100 | 100 |
| | hard PVC | 100 | 100 | 100 | 100 | 100 |
| | soft PVC | 100 | 100 | 100 | 100 | 100 |
| | ABS | 100 | 100 | 100 | 100 | 100 |
| | PS | 100 | 100 | 100 | 100 | 100 |

(continued)

| | | Example | Example | Example | Example | Example |
|---|---|---|---|---|---|---|
| | water resistance test | | | | | |
| | glass | O | O | O | O | O |
| | PC | O | O | O | O | O |
| | PMMA | O | O | O | O | O |
| | PET | O | O | O | O | O |
| | hard PVC | O | O | O | O | O |
| | soft PVC | O | O | O | O | O |
| | ABS | O | O | O | O | O |
| | PS | O | O | O | O | O |
| | weather resistance test | | | | | |
| | glass | O | O | O | O | O |
| | PC | O | O | O | O | O |
| | PMMA | O | O | O | O | O |
| | PET | O | O | O | O | O |
| | hard PVC | O | O | O | O | O |
| | soft PVC | O | O | O | O | O |
| | ABS | O | O | O | O | O |
| | PS | O | O | O | O | O |
| | solvent resistance test | | | | | |
| | glass | O | O | O | O | O |
| | PC | O | O | O | O | O |
| | PMMA | O | O | O | O | O |
| | PET | O | O | O | O | O |
| | hard PVC | O | O | O | O | O |
| | soft PVC | O | O | O | O | O |
| | ABS | O | O | O | O | O |
| | PS | O | O | O | O | O |

Table 6

| | | Example | Example |
|---|---|---|---|
| Component | | 26 | 27 |
| (a-1) (i) | CN975 urethane acrylate available from Sartomer Co. | 25 | 15 |
| (a-1) (ii) | CN292 polyester acrylate available from Sartomer Co. | | |
| (a-1) (iii) | CNUVE151 epoxy acrylate available from Sartomer Co. | | |
| (a-1) (iv) | CN963B80 urethane acrylate available from Sartomer Co. | | |
| (a-2) | LIGOLAC21 E-A-2 available from Showa Highpolymer Co. | | |
| (b-1) (i) | N-vinyl caprolactam | 60 | 70 |

(continued)

| | | Example | Example |
|---|---|---|---|
| (b-2) (i) | dipropylene glycol diacrylate (DPGDA) | | |
| (b-2) (ii) | tripropylene glycol diacrylate (TPGDA) | | |
| (c-1) | dicyclopentadiene | 15 | 15 |
| (c-2) | CHDM | | |
| (d-1-2) | polybutadiene polyol Poly bd R-15HT | | |
| (d-1-1-1) | aromatic castor oil-based polyol URIC AC-006 | | |
| (d-1-3) | polyisoprene-based polyol Poly ip | | |
| (d-2-1) | castor oil-based polyol URIC H-1262 | | |
| (d-2-1) | castor oil-based polyol URIC H-2151U | | |
| (d-1-3) | hydroxy-terminated liquid polyolefin Epol | | |
| (d-3-1) | maleated polyisoprene LIR-420 | | |
| (d-3-2) | maleic acid modified polybutadiene Ricon130MA8 | | |
| (d-3-2) | S | | |
| (d-1-4) | epoxy polyol EPICLON U-125-60BT | | |
| (d-4-1) | polyepoxy compound ADEKA RESIN EP-4100E | | |
| (d-4-2) | L-207 | | |
| (e) (i) | IRGACURE 819 | 5 | 5 |
| (e) (ii) | PERHEXA 25B | | |
| | Total (parts by mass) | 105 | 105 |
| Evaluation result | viscosity mPa.s(25°C) | 800 | 650 |
| | haze value % (glass coat) | 0.9 | 0.8 |
| | total light transmittance % (glass coat) | 87 | 89 |
| | pencil hardness (glass coat) | H | 3H |
| | taber abrasion (ΔH) % (PC coat) | 2.2 | 2 |
| | adhesion test | | |
| | glass | 100 | 100 |
| | PC | 100 | 100 |
| | PMMA | 100 | 100 |
| | PET | 100 | 100 |
| | hard PVC | 100 | 100 |
| | soft PVC | 100 | 100 |
| | ABS | 100 | 100 |
| | PS | 100 | 100 |
| | water resistance test | | |
| | glass | ○ | ○ |
| | PC | ○ | ○ |
| | PMMA | ○ | ○ |
| | PET | ○ | ○ |

(continued)

| | | Example | Example |
|---|---|---|---|
| | hard PVC | ○ | ○ |
| | soft PVC | ○ | ○ |
| | ABS | ○ | ○ |
| | PS | ○ | ○ |
| | weather resistance test | | |
| | glass | ○ | ○ |
| | PC | ○ | ○ |
| | PMMA | ○ | ○ |
| | PET | ○ | ○ |
| | hard PVC | ○ | ○ |
| | soft PVC | ○ | ○ |
| | ABS | ○ | ○ |
| | PS | ○ | ○ |
| | solvent resistance test | | |
| | glass | ○ | ○ |
| | PC | ○ | ○ |
| | PMMA | ○ | ○ |
| | PET | ○ | ○ |
| | hard PVC | ○ | ○ |
| | soft PVC | ○ | ○ |
| | ABS | ○ | ○ |
| | PS | ○ | ○ |

Table 7

| | | Comp. Ex. | Comp. Ex. | Comp. Ex. | Comp. Ex. | Comp. Ex. |
|---|---|---|---|---|---|---|
| Component | | 1 | 2 | 3 | 4 | 5 |
| (a-1) (i) | CN975 urethane acrylate available from Sartomer Co. | 5 | 35 | 40 | 10 | 25 |
| (a-1) (ii) | CN292 polyester acrylate available from Sartomer Co. | | | | | |
| (a-1) (iii) | CNUVE151 epoxy acrylate available from Sartomer Co. | | | | | |
| (a-1) (iv) | CN963B80 urethane acrylate avaialble from Sartomer Co. | | | | | |
| (a-2) | LIGOLAC21 E-A-2 available from Showa Highpolymer Co. | | | | | |

(continued)

| | | Comp. Ex. | Comp. Ex. | Comp. Ex. | Comp. Ex. | Comp. Ex. |
|---|---|---|---|---|---|---|
| (b-1) (i) | N-vinyl caprolactam | 10 | 10 | 10 | 10 | 10 |
| (b-2) (i) | dipropylene glycol diacrylate (DPGDA) | 65 | 40 | 35 | 70 | 60 |
| (b-2) (ii) | tripropylene glycol diacrylate (TPGDA) | | | | | |
| (c-1) | dicyclopentadiene | 10 | 10 | 10 | 5 | |
| (c-2) | CHDM | | | | | |
| (d-1-2) | polybutadiene polyol Poly bd R-15HT | 10 | 5 | 5 | 5 | 5 |
| (d-1-1-1) | aromatic castor-oil based polyol URIC AC-006 | | | | | |
| (d-1-3) | polyisoprene-based polyol Poly ip | | | | | |
| (d-2-1) | castor oil-based polyol URIC H-1262 | | | | | |
| (d-2-1) | castor oil-based polyol URIC H-2151U | | | | | |
| (d-1-3) | hydroxy-terminated liquid polyolefin Epol | | | | | |
| (d-3-1) | maleated polyisoprene LIR-420 | | | | | |
| (d-3-2) | maleic acid modified polybutadiene Ricon130MA8 | | | | | |
| (d-3-2) | S | | | | | |
| (d-1-4) | epoxy polyol EPICLON U-125-60BT | | | | | |
| (d-4-1) | polyepoxy compound ADEKA RESIN EP-4100E | | | | | |
| (d-4-2) | L-207 | | | | | |
| (e) (i) | IRGACURE 819 | 5 | 5 | 5 | 5 | 5 |
| (e) (ii) | PERHEXA 25B | | | | | |
| | Total (parts by mass) | 105 | 105 | 105 | 105 | 105 |
| Evaluation result | viscosity mPa.s(25°C) | 170 | 1050 | 1200 | 320 | 2200 |
| | haze value % (glass coat) | 0.8 | 0.8 | 0.8 | 0.8 | 0.8 |
| | total light transemittance % (glass coat) | 89 | 89 | 89 | 89 | 89 |
| | pencil hardness (glass coat) | HB | HB | HB | HB | HB |
| | taber abrasion (ΔH) % (PC coat) | 4.7 | 5.3 | 5.2 | 5.5 | 5.5 |
| | adhesion test | | | | | |
| | glass | 50 | 100 | 100 | 85 | 100 |

(continued)

| | | Comp. Ex. | Comp. Ex. | Comp. Ex. | Comp. Ex. | Comp. Ex. |
|---|---|---|---|---|---|---|
| | PC | 100 | 100 | 100 | 100 | 100 |
| | PMMA | 70 | 100 | 100 | 88 | 100 |
| | PET | 100 | 100 | 100 | 100 | 100 |
| | hard PVC | 100 | 100 | 100 | 100 | 100 |
| | soft PVC | 100 | 100 | 100 | 100 | 100 |
| | ABS | 100 | 100 | 100 | 100 | 100 |
| | PS | 85 | 100 | 100 | 93 | 100 |
| | water resistance test | | | | | |
| | glass | × | ○ | ○ | × | × |
| | PC | × | ○ | ○ | × | × |
| | PMMA | × | ○ | ○ | × | × |
| | PET | × | ○ | ○ | × | × |
| | hard PVC | × | ○ | ○ | × | × |
| | soft PVC | × | ○ | ○ | × | × |
| | ABS | × | ○ | ○ | × | × |
| | PS | × | ○ | ○ | × | × |
| | weather resistance test | | | | | |
| | glass | × | ○ | ○ | × | × |
| | PC | × | ○ | ○ | × | × |
| | PMMA | × | ○ | ○ | × | × |
| | PET | × | ○ | ○ | × | × |
| | hard PVC | × | ○ | ○ | × | × |
| | soft PVC | × | ○ | ○ | × | × |
| | ABS | × | ○ | ○ | × | × |
| | PS | × | ○ | ○ | × | × |
| | solvent resistance test | | | | | |
| | ガラス | × | Δ | Δ | × | × |
| | PC | × | Δ | Δ | × | × |
| | PMMA | × | Δ | Δ | × | × |
| | PET | × | Δ | Δ | × | × |
| | hard PVC | × | Δ | Δ | × | × |
| | soft PVC | × | Δ | Δ | × | × |
| | ABS | × | Δ | Δ | × | × |
| | PS | × | Δ | Δ | × | × |

Table 8

| | | Comp. Ex. | Comp. Ex. | Comp. Ex. |
|---|---|---|---|---|
| Component | | 6 | 7 | 8 |
| (a-1) (i) | CN975 urethane acrylate available from Sartomer Co. | 25 | 25 | 10 |
| (a-1) (ii) | CN292 polyester acrylate available from Sartomer Co. | | | |
| (a-1) (iii) | CNUVE151 epoxy acrylate available from Sartomer Co. | | | |
| (a-1) (iv) | CN963B80 urethane acrylate available from Sartomer Co. | | | |
| (a-2) | LIGOLAC21 E-A-2 available from Showa Highpolymer Co. | | | |
| (b-1) (i) | N-vinyl caprolactam | 10 | 10 | 10 |
| (b-2) (i) | dipropylene glycol diacrylate (DPGDA) | 40 | 60 | 50 |
| (b-2) (ii) | tripropylene glycol diacrylate (TPGDA) | | | |
| (c-1) | dicyclopentadiene | 25 | 10 | 10 |
| (c-2) | CHDM | | | |
| (d-1-2) | polybutadiene polyol Poly bd R-15HT | 5 | 10 | 5 |
| (d-1-1-1) | aromatic castor oil-based polyol URIC AC-006 | | | |
| (d-1-3) | polyisoprene-based polyol Poly ip | | | |
| (d-2-1) | castor oil-based polyol URIC H-1262 | | | |
| (d-2-1) | castor oil-based polyol URIC H-2151U | | | |
| (d-1-3) | hydroxy-terminated liquid polyolefin Epol | | | |
| (d-3-1) | maleated polyisoprene LIR-420 | | | |
| (d-3-2) | maleic acid modified polybutadiene Ricon130MA8 | | | |
| (d-3-2) | maleic acid modified polybutadiene POLYVEST OC 800 S | | | |
| (d-1-4) | epoxy polyol EPICLON U-125-60BT | | | |
| (d-4-1) | polyepoxy compound ADEKA RESIN EP-4100E | | | |
| (d-4-2) | L-207 | | | |
| (e) (i) | IRGACURE 819 | 5 | 0.05 | 20 |
| (e) (ii) | PERHEXA 25B | | | |
| | total (parts by mass) | 110 | 115.05 | 105 |
| Evaluation result | viscosity mPa.s(25°C) | 770 | 770 | 320 |
| | haze value % (glass coat) | 0.8 | - | 0.8 |
| | total light transmittance % (glass coat) | 89 | - | 89 |
| | pencil hardness (glass coat) | 3H | - | 3H |
| | taber abrasion (ΔH) % (PC coat) | 2.1 | - | 2.1 |
| | adhesion test | | - | |
| | glass | 50 | - | 90 |
| | PC | 100 | - | 100 |
| | PMMA | 40 | - | 90 |

(continued)

| | | Comp. Ex. | Comp. Ex. | Comp. Ex. |
|---|---|---|---|---|
| | PET | 100 | - | 100 |
| | hard PVC | 100 | - | 100 |
| | soft PVC | 100 | - | 100 |
| | ABS | 80 | - | 100 |
| | PS | 60 | - | 95 |
| | water resistance test | | | |
| | glass | × | - | × |
| | PC | × | - | × |
| | PMMA | × | - | × |
| | PET | × | - | × |
| | hard PVC | × | - | × |
| | soft PVC | × | - | × |
| | ABS | × | - | × |
| | PS | × | - | × |
| | weather resistance test | | | |
| | glass | × | - | × |
| | PC | × | - | × |
| | PMMA | × | - | × |
| | PET | × | - | × |
| | hard PVC | × | - | × |
| | soft PVC | × | - | × |
| | ABS | × | - | × |
| | PS | × | - | × |
| | solvent resistance test | | | |
| | glass | × | - | × |
| | PC | × | - | × |
| | PMMA | × | - | × |
| | PET | × | - | × |
| | hard PVC | × | - | × |
| | soft PVC | × | - | × |
| | ABS | × | - | × |
| | PS | × | - | × |

The Tables of Examples shows that the hard coat paint of each example realizes a high order well-balanced combination of hardness, abrasion resistance, weather resistance, chemical resistance and water resistance and shows an excellent adhesion property relative to substrates of various types because it is formed by compounding the specific components (a) to (e) at a specified percentage ratio.

Comparative Example 1 shows brittleness and a poor Taber abrasion and its water resistance, solvent resistance and weather resistance are also poor because, with regard to the compounding ratio, the percentage of the component (a) is lower than the lower limit defined according to the present invention.

Comparative Example 2 shows a poor pencil hardness and a poor Taper abrasion and its solvent resistance was also

poor because, with regard to the compounding ratio, the percentage of the component (a) is higher than the upper limit defined according to the present invention.
Comparative Example 3 shows a poor pencil hardness and a poor Taper abrasion and its solvent resistance was also poor because, with regard to the compounding ratio, the percentage of the component (a) is higher than the upper limit defined according to the present invention and that of the component (b) is lower than the lower limit defined according to the present invention.
Comparative Example 4 shows brittleness as well as a poor Taber abrasion and a poor pencil hardness and its water resistance, solvent resistance and weather resistance are also poor because, with regard to the compounding ratio, the percentage of the component (b) was higher than the upper limit defined according to the present invention.
Comparative Example 5 shows brittleness and an excessively high viscosity to make it difficult to be handled and also shows a poor Taber abrasion and a poor pencil hardness, while its water resistance, solvent resistance and weather resistance are also poor because no component (c) was compounded.
Comparative Example 6 shows an excessive contraction to provide a poor water resistance and its solvent resistance and weather resistance are also poor because, with regard to the compounding ratio, the percentage of the component (c) is higher than the upper limit defined according to the present invention.
Comparative Example 7 shows an insufficient hardening because, with regard to the compounding ratio, the percentage of the component (e) is lower than the lower limit defined according to the present invention.
Comparative Example 8 shows an excessive contraction to provide a poor water resistance and its solvent resistance and weather resistance are also poor because, with regard to the compounding ratio, the percentage of the component (e) is higher than the upper limit defined according to the present invention.
When the application thickness of hard coat paint according to the present invention was reduced to 5 μm, excellent results similar to those of Examples 1 to 27 were obtained.

## Claims

**1.** A hard coat paint **characterized by** containing:

(a) vinyl ester resin or unsaturated polyester resin by 10 to 30 mass%;
(b) vinyl monomer and/or (meth) acrylate monomer by 50 to 75 mass%;
(c) monomer having a cyclic structure and at least one ethylenically unsaturated group in a molecule by 3 to 20 mass%;
(d) a modifying agent by 0 to 10 mass%;
(provided that the total of the components (a) to (d) is 100 mass%); and
(e) at least one radical polymerization initiator selected from a group of organic peroxides, UV reaction initiators and electron beam reaction initiators by 0.1 to 15 parts by mass relative to the total of 100 parts by mass of the components (a) to (d);
(provided that, if the component (b) contains a cyclic structure, the cyclic structure contains a heteroatom); and
(provided that the component (c) does not contain any heteroatom in the cyclic structure).

**2.** The hard coat paint as claimed in claim 1, **characterized in that** a hard coat layer can obtain a pencil hardness of not less than F.

**3.** A molded body **characterized by** containing:

a hard coat layer (A) formed by the hard coat paint as claimed in claim 1 or 2 and applied onto a substrate (B) made of glass, a polycarbonate, an acryl-based resin, a polyester-based resin, soft and hard vinyl chloride resins, or a styrene-based resin.

**4.** The molded body as claimed in claim 3, **characterized in that** the thickness of the hard coat layer (A) is between 0.5 to 20 μm.

**INTERNATIONAL SEARCH REPORT**

International application No.
PCT/JP2010/058534

A. CLASSIFICATION OF SUBJECT MATTER
*C09D4/06*(2006.01)i, *B32B27/30*(2006.01)i, *C09D4/00*(2006.01)i, *C09D5/00*(2006.01)i, *C09D135/02*(2006.01)i

According to International Patent Classification (IPC) or to both national classification and IPC

B. FIELDS SEARCHED

Minimum documentation searched (classification system followed by classification symbols)
C09D4/06, B32B27/30, C09D4/00, C09D5/00, C09D135/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 05-051542 A (Japan Synthetic Rubber Co., Ltd.), 02 March 1993 (02.03.1993), entire text; particularly, claims; examples (Family: none) | 1-4 |
| A | JP 56-002357 A (Mitsubishi Petrochemical Co., Ltd.), 12 January 1981 (12.01.1981), entire text; particularly, claims; examples (Family: none) | 1-4 |
| A | JP 2001-322197 A (Teijin Ltd.), 20 November 2001 (20.11.2001), entire text; particularly, claims; examples (Family: none) | 1-4 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 July, 2010 (26.07.10) | 03 August, 2010 (03.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 48081928 A
- JP 52138565 A
- JP 53138476 A
- JP 2005089712 A